# EUROPEAN PATENT SPECIFICATION

(11) **EP 4 338 034 B1**
(45) Date of publication and mention of the grant of the patent: **17.06.2026**
(21) Application number: 21725134.7
(22) Date of filing: 10.05.2021
(51) Int. Cl.: G06F 3/01, G06F 1/16

(54) **WEARABLE RING-SHAPED ELECTRONIC DEVICE, AND METHODS OF THE RING-SHAPED ELECTRONIC DEVICE**
AM KÖRPER TRAGBARE RINGFÖRMIGE ELEKTRONISCHE VORRICHTUNG UND VERFAHREN FÜR DIE RINGFÖRMIGE ELEKTRONISCHE VORRICHTUNG
DISPOSITIF ÉLECTRONIQUE EN FORME D'ANNEAU POUVANT ÊTRE PORTÉ, ET PROCÉDÉS DU DISPOSITIF ÉLECTRONIQUE EN FORME D'ANNEAU

(43) Date of publication of application: 20.03.2024
(73) Proprietor: Telefonaktiebolaget LM Ericsson (publ), 164 83 Stockholm (SE)
(72) Inventor: HUNT, Alexander, 218 72 Tygelsjö (SE); CALTENCO, Héctor, 238 34 Oxie (SE); DAHLGREN, Fredrik, 224 65 Lund (SE)
(74) Representative: Ericsson
(86) International application number: PCT/EP2021/062357
(87) International publication number: WO 2022/237957

(56) References cited:
- US-A1- 2015 277 559
- US-A1- 2015 309 316
- US-A1- 2017 308 165
- US-B1- 10 139 906
- JUNGMIN CHUNG ET AL: "PairRing", HUMAN FACTORS IN COMPUTING SYSTEMS, ACM, 2 PENN PLAZA, SUITE 701NEW YORKNY10121-0701USA, 20 April 2018 (2018-04-20), pages 1 - 6, XP058402278, ISBN: 978-1-4503-5621-3, DOI: 10.1145/3170427.3188590

## Description

### TECHNICAL FIELD

The embodiments herein relate to a wearable ring-shaped electronic device and methods of the electronic ring-shaped device. A corresponding computer program and a computer program carrier are also disclosed.

### BACKGROUND

Today's smartwatches have a touchscreen and typically one or multiple buttons. Interaction with the watch is either done by using fingers from the other hand, voice control, or some gesture-based simplistic control such as showing display content when the hand holding the watch is raised towards the user.

A problem with the typical user interfaces (Uls) for smart watches is that they typically require both hands to be involved. Exceptions are very basic gestures, such as raising the arm to light up the touchscreen, and voice control. The latter being difficult to use in many circumstances and limited in usefulness for many applications.

There are many situations where the second arm or hand, i.e., not the arm of the watch, is busy and cannot be used. This may be when carrying a bag, controlling equipment, or because of other inabilities to use both arms such as injury and/or disability.

US 10 139 906 B1 discloses a smart ring for sensing user gestures. It comprises several contact regions able to sense the proximity or presence of a touch on them. The touch is produced by the fingers of the hand on whose one finger the smart ring is placed. Different touch patterns or movement of the other fingers in relation to each other and in relation to these contact regions are sensed as different gestures.

US 2017/308165 A1 discloses a data input device comprising a number of inertial sensor units mounted inside rings placed over one or more user fingers and one or more touch input devices which may be present on one or more of the rings. Movement of the fingers which have a ring placed on them and touch on the touch input device on one of the other rings is interpreted as gestures which are used to control application software. Touch in conjunction with movement of the fingers which contain movement sensitive rings is interpreted as an action that controls a software application.

US 2015/277559 A1 discloses a smart ring with a touch-screen, a computer processor, circuitry for wireless transmission and a rechargeable battery. The ring worn on a first finger receives an input from a second finger, selects one of a plurality of touch events associated with the input, and wirelessly transmits a command associated with the touch event to an external electronic device.

### SUMMARY

Other electronic devices, such as TVs and computers may be remotely controlled by ring-shaped electronic devices with built-in sensors such as inertial measurement units, (IMU). For example, some ring devices are used to make gesture input to other devices such as computers or smartphones. The controlled device may then in turn have a large display and a content being shown on the display, e.g., presentations or games, may be controlled by gestures from the finger or hand carrying the ring.

The ring devices typically use wireless connectivity such as Bluetooth to communicate with the remote device they control.

The ring devices based on IMU's being capable of detecting certain gestures typically work better when the complete hand can be moved, which is the case when you control an external screen or device but not the case when controlling a watch being carried by the same arm that should be as still as possible when looking at it. This severely limits the usability of such ring devices to control smart watches.

Furthermore, there is a substantially higher risk for false positives when a gesture should be detected by an IMU or accelerometer in the ring device if only the relative movement of the finger vs. the arm is significant, and the arm must be relatively still but is still subject to some movements due to the user's action e.g., walking, running, sailing, etc.

Another proposed way of controlling a remote device with a ring device is by integrating a touchpad with the ring device. These ring devices are proposed to be used as an input device to the remote device.

A problem with existing electronic ring-shaped devices that have in-built touchpads is that they are very clumsy to wear, in that they have a big surface that acts like a touch pad of a laptop but in a smaller shape. The ring becomes difficult to make good-looking and might be awkward to use.

An object of embodiments herein may be to obviate some of the problems related to controlling wearable electronic devices, or at least reduce the impact of them.

According to an aspect, the object is achieved by method, performed by a wearable electronic ring-shaped device. The electronic ring-shaped device comprises a plurality of outer touch sensitive areas arranged on an outer face of the electronic ring-shaped device.
The method comprises sensing a touch pattern of the electronic ring-shaped device with at least a first outer touch sensitive area of the plurality of outer touch sensitive areas.

The method further comprises activating the electronic ring-shaped device to sense a gesture with one or more of the plurality of outer touch sensitive areas in response to sensing the touch pattern.

According to a further aspect, the object is achieved by a wearable electronic ring-shaped device. The wearable electronic ring-shaped device comprises a plurality of outer touch sensitive areas arranged on an outer face of the electronic ring-shaped device. The electronic ring-shaped device is configured to:
sense a touch pattern of the electronic ring-shaped device with at least a first outer touch sensitive area of the plurality of outer touch sensitive areas; and
in response to the sensed touch pattern activate the electronic ring-shaped device to sense a gesture with the plurality of outer touch sensitive areas.

According to a further aspect, the object is achieved by a computer program comprising instructions, which when executed by a processor, causes the processor to perform actions according to any of the aspects above.

According to a further aspect, the object is achieved by a carrier comprising the computer program of the aspect above, wherein the carrier is one of an electronic signal, an optical signal, an electromagnetic signal, a magnetic signal, an electric signal, a radio signal, a microwave signal, or a computer-readable storage medium.

Since the electronic ring-shaped device activates the electronic ring-shaped device to sense the gesture with the one or more of the plurality of outer touch sensitive areas in response to sensing the touch pattern the electronic ring-shaped device saves power and minimises false positives.

A further advantage of embodiments herein is that they are compatible with one-handed operation of the electronic ring-shaped device and also with one-handed operation of a further wearable electronic device which the electronic ring-shaped device may control.

A further advantage of embodiments herein is that the touch sensitive areas may be implemented as capacitive touch sensitive areas which have a fairly low complexity and enable a small size overhead yet enable a usage which has a sufficient number of distinguishable gestures for a rich user interface and is robust in its opportunities to minimize the number of false positives. For example, limitations to finger movements relative the movement of the hand are reduced.

### BRIEF DESCRIPTION OF THE DRAWINGS

In the figures, features that appear in some embodiments are indicated by dashed lines.

The various aspects of embodiments disclosed herein, including particular features and advantages thereof, will be readily understood from the following detailed description and the accompanying drawings, in which:
Figure 1 illustrates exemplifying embodiments of wearable electronic devices,
Figure 2a illustrates exemplifying embodiments of a wearable electronic ring-shaped device,
Figure 2b illustrates further exemplifying embodiments of a wearable electronic ring-shaped device,
Figure 2c illustrates further exemplifying embodiments of a wearable electronic ring-shaped device,
Figure 2d illustrates details of exemplifying embodiments of a wearable electronic ring-shaped device,
Figure 2e illustrates details of further exemplifying embodiments of a wearable electronic ring-shaped device,
Figure 2f illustrates further exemplifying embodiments of a wearable electronic ring-shaped device,
Figure 2g is a block diagram illustrating embodiments of the wearable electronic ring-shaped device and a further wearable electronic device,
Figure 2h illustrates further exemplifying embodiments of a wearable electronic ring-shaped device,
Figure 3 is a flowchart illustrating embodiments of a method performed by a wearable electronic ring-shaped device,
Figure 4a is a flowchart illustrating further embodiments of a method performed by a wearable electronic ring-shaped device,
Figure 4b illustrates further embodiments of a method performed by a wearable electronic ring-shaped device,
Figure 4c illustrates further embodiments of a method performed by a wearable electronic ring-shaped device,
Figure 4d is a flowchart illustrating yet further embodiments of a method performed by a wearable electronic ring-shaped device,
Figure 5 is a block diagram illustrating embodiments of a wearable electronic ring-shaped device.

### DETAILED DESCRIPTION

As mentioned above, an object of embodiments herein is to provide a robust solution for one-handed operation of a wearable electronic device such as a smart watch.

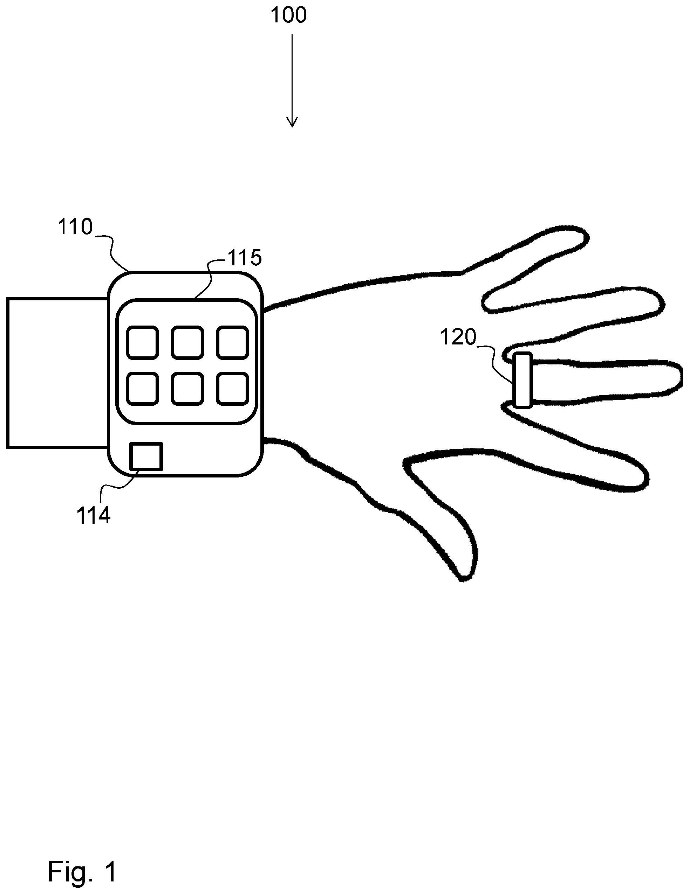

Embodiments herein relate to wearable electronic devices. **Figure 1** depicts a **wearable electronic device 110** for which embodiments herein may be relevant.

The wearable electronic device 110 may be any of a smart watch, a mobile phone, a headset, electronic clothing and an electronic eyewear or any combination of the smart watch, the mobile phone, the headset, electronic clothing and the electronic eyewear. The wearable electronic device 110 may also be an electronic wrist band or an electronic fitness band.

In Figure 1 the wearable electronic device 110 is illustrated with a front side of a smart watch. The wearable electronic device 110 may comprise a graphical user interface, GUI, e.g., for controlling the wearable electronic device 110. For example, the GUI of the wearable electronic device 110 may comprise one or more touch sensors for controlling the wearable electronic device 110. The GUI may be presented on a display **115,** e.g., on the front side of the wearable electronic device 110.

In some embodiments herein the wearable electronic device 110 comprises a **motion sensor 114,** such as an inertial measurement unit. The motion sensor 114 may provide data about the motion of the wearable electronic device 110.

The wearable electronic device 110 may further comprise one or more physical buttons which are not illustrated in Figure 1.

As mentioned above, it may be of importance in some scenarios to be able to operate the wearable electronic device 110 with one hand, specifically the hand which the wearable electronic device 110 is attached to. Therefore, embodiments herein may be implemented in a **wearable electronic ring-shaped device 120** which may be configured to control the wearable electronic ring-shaped device 120 as well as the wearable electronic device 110.

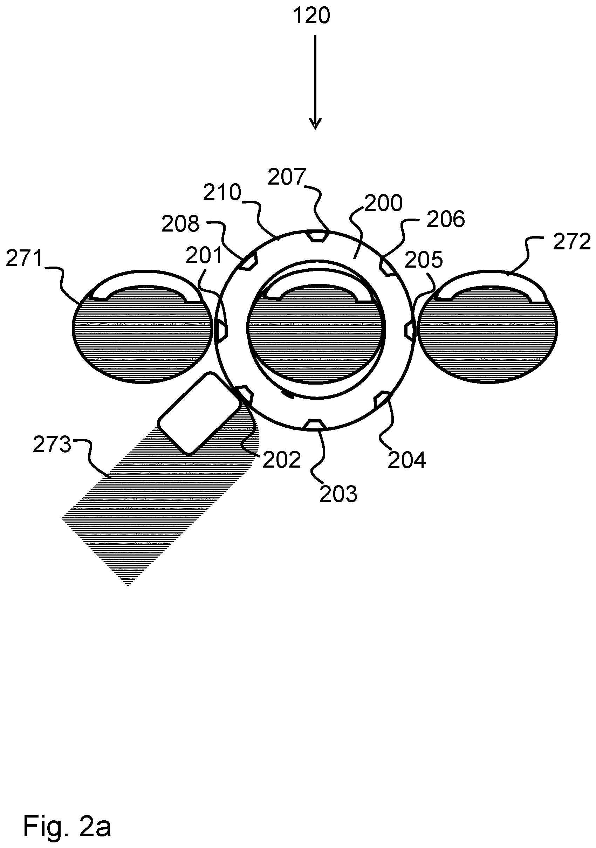

**Figure 2a** illustrate an embodiment of the electronic ring-shaped device 120. The electronic ring-shaped device 120 may comprise **a ring-shaped mechanical structure 200** adapted to be fitted to a finger. Different electronic devices which will be presented below may be arranged within the ring-shaped mechanical structure 200. The electronic ring-shaped device 120 comprises **a plurality of outer touch sensitive areas 201-208** arranged on **an outer face 210** of the electronic ring-shaped device 120. The touch sensitive areas 201-208 may be capacitive touch sensitive areas. As an example, the electronic ring-shaped device 120 is illustrated in Figure 2a as comprising eight outer touch sensitive areas: **a first outer touch sensitive area 201, a second outer touch sensitive area 202, a third outer touch sensitive area 203, a fourth outer touch sensitive area 204, a fifth outer touch sensitive area 205, a sixth outer touch sensitive area 206, a seventh outer touch sensitive area 207,** and **an eight outer touch sensitive area 208.**

The outer face 210 may be an outer face of the mechanical structure 200. The plurality of outer touch sensitive areas 201-208 may also be referred to as touch sensors, such as capacitive touch sensors. An object interacting with a capacitive touch sensor influences a capacitance of the touch sensor. The influence may be measured for example by measuring the capacitance of the capacitive touch sensor or other related parameters.

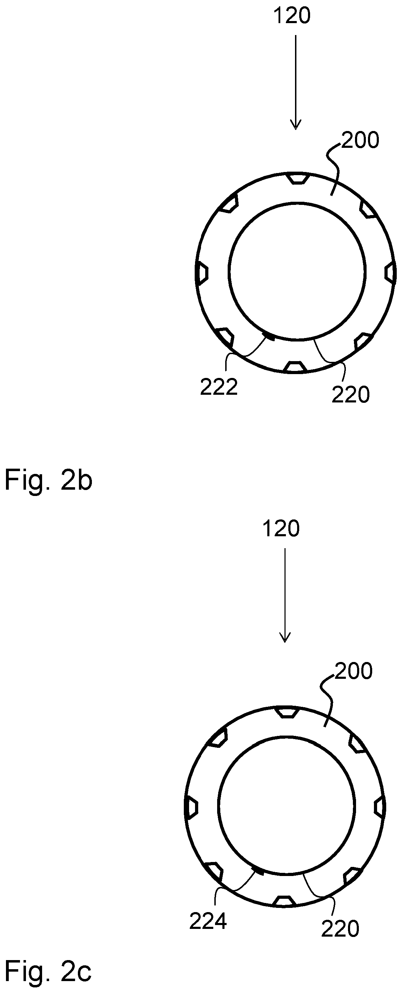

As illustrated in **Figure 2b****,** the electronic ring-shaped device 120 may further comprise **an inner face 220** on which **an inner touch sensitive area 222** may be arranged. In some embodiments there are multiple inner touch sensitive areas arranged on the inner face 220. The inner face 220 may be an inner face of the mechanical structure 200.

As illustrated in **Figure 2c****,** the wearable electronic ring-shaped device 120 may further comprise **a communication electrode 224,** such as an Internal Communication Electrode (ICE), for communication with the wearable electronic device 110. The communication electrode 224 may be arranged on the inner face 220 of the electronic ring-shaped device 120. The communication electrode 224 may also function as the inner touch sensitive area 222. However, in some other embodiments the inner touch sensitive area 222 is separate from the communication electrode 224. In some embodiments there are multiple communication electrodes arranged on the inner face 220.

Since a scenario in which embodiments herein may be implemented is that the wearable device 110 is arranged on a same limb as the electronic ring-shaped device 120 the communication power may be kept low. For example, the communication may be done through a body area network, e.g., with in-body communication (IBC), or a low-power radio, such as Bluetooth Low Energy (BLE). IBC may also be referred to as human-body communication (HBC).

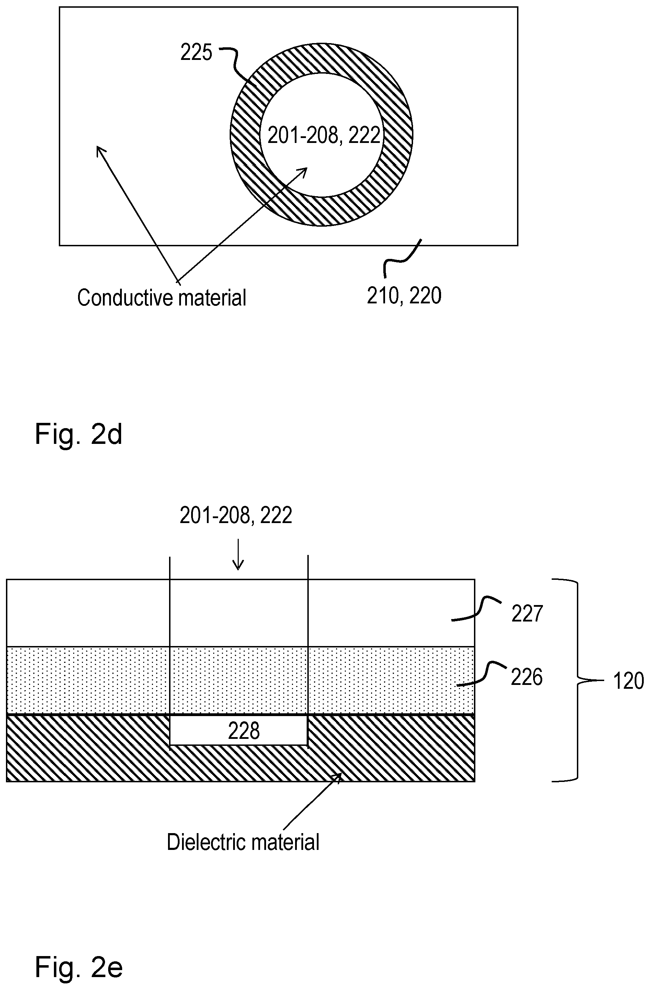

**Figure 2d** illustrates details of some embodiments of the electronic ring-shaped device 120. More specifically, Figure 2d illustrates a part of the outer face 210, including one of the outer touch sensitive areas 201-208, of the electronic ring-shaped device 120. In Figure 2d the electronic ring-shaped device 120 is at least partly made of a conductive material, such as metal. For example, the ring-shaped mechanical structure 200 may at least partly be made of the conductive material, such as metal. Then the touch sensitive areas 201-208, 222 may be protected by **a dielectric material structure 230.** For example, it is possible to combine metal and plastic molds to achieve such a design.

**Figure 2e** illustrates details of some other embodiments of the electronic ring-shaped device 120. More specifically, Figure 2e illustrates a cut through a part of the electronic ring-shaped device 120, including one of the touch sensitive areas 201-208, 222. In Figure 2e he electronic ring-shaped device 120 comprises three different parts, such as three different material layers, within the touch sensitive area. For example, the ring-shaped mechanical structure 200 may comprise one or more of the three different parts. In some examples, **a dielectric material part 226** may be arranged between **two conductive material parts 227 and 228.** Then it is possible to measure the capacitive change between the two conductive materials.

Further, any wiring comprised in the electronic ring-shaped device 120 and needed for the operation of the electronic ring-shaped device 120 may be isolated from any other wiring and from other metal parts of the electronic ring-shaped device 120. A dielectric material may provide the isolation.

In other embodiments the ring-shaped mechanical structure 200 is made from a non-conductive material, such as plastic.

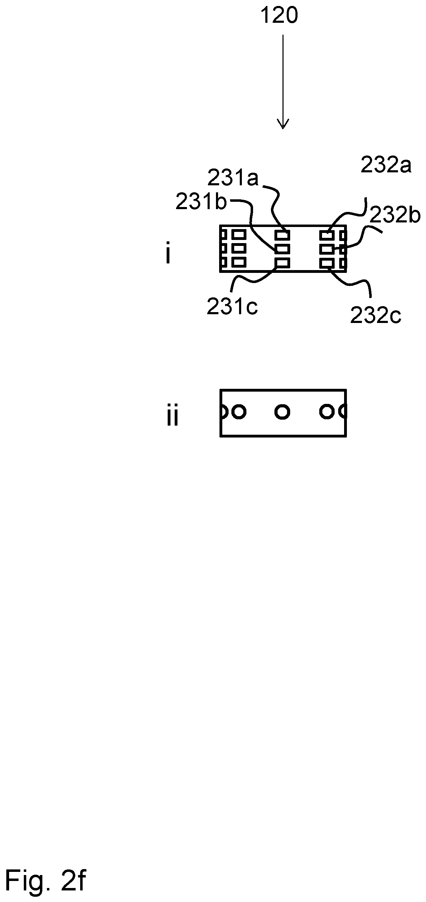

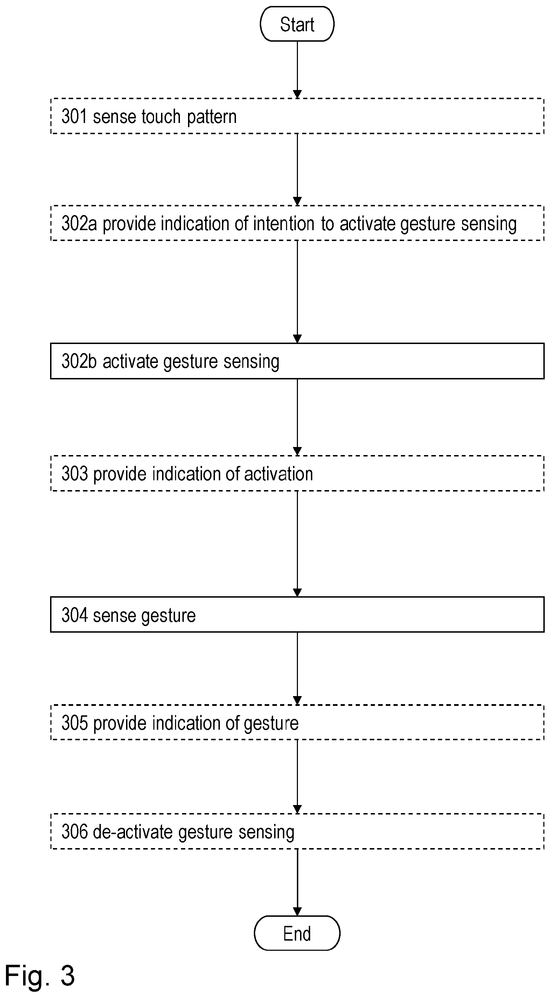

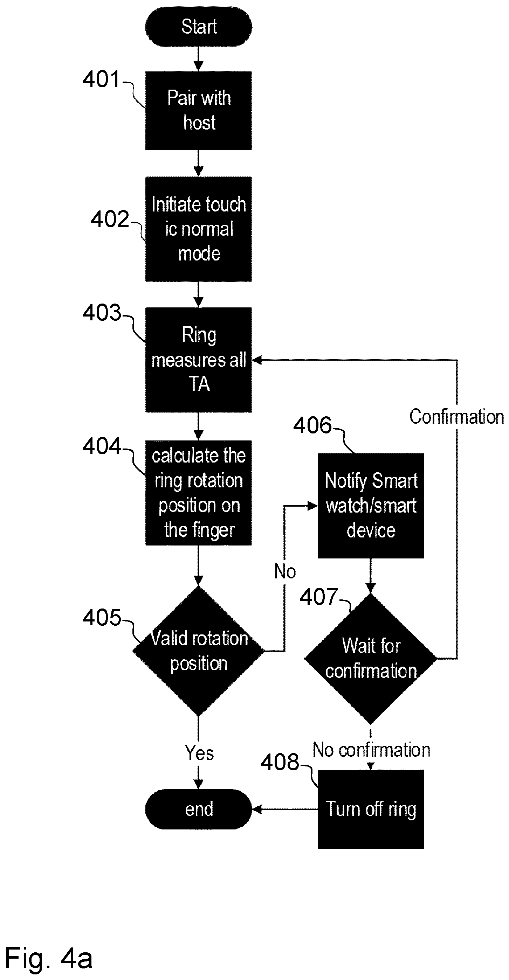

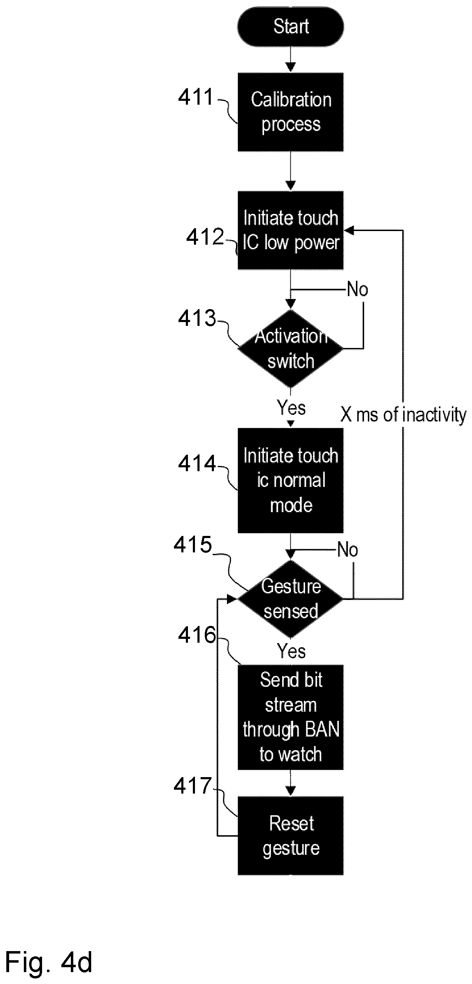

**Figure 2f** illustrates different ring designs. In embodiments herein a ring design relates to a shape of the one or more outer touch sensitive areas 201-208 and a distribution of them on the outer face 210 of the ring-shaped device 120. The electronic ring-shaped device 120 may have different designs depending on the application. In Figure 2f two different ring designs are shown. **A first ring design i** is a matrix solution with the possibility to have a two-dimensional touch surface comprised of touch sensitive areas spread out in two dimensions. This may enable more gestures and thus more possibilities to interact with another different device, such as the wearable electronic device 110. Since **outer touch sensitive areas 231a-c, 232a-c,** of the first ring design i are separated the design of such ring-shaped devices will be larger than **a second ring design ii** which is more suitable for detecting swipe gestures or one-dimensional touches. The second ring design ii may for example be used with the exemplifying embodiments described below in relation to Figure 3 and Figures 4a and 4d. Adding another dimension, as in the first ring design, a bit length of a gesture identifier may need to be longer.

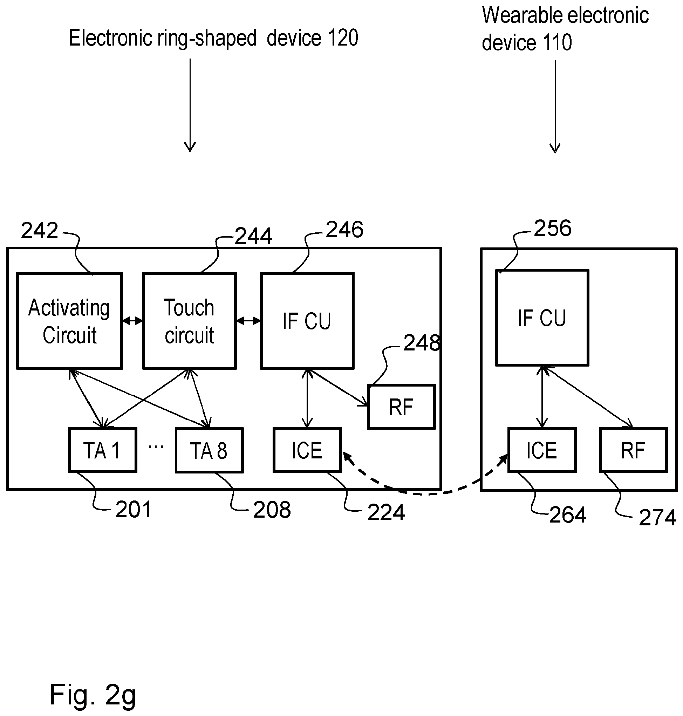

**Figure 2g** illustrates components which may be internal to the ring-shaped device 120 and their communication paths indicated with arrows. Figure 2g further illustrates with arrows how the components are connected to the outer touch sensitive areas 201-208. In some embodiments herein the electronic ring-shaped device 120 comprises **an activating circuit 242** electrically connected to each outer touch sensitive area 201-208. The activating circuit 242 may also be referred to as an activation switch. The activating circuit 242 may be implemented as an integrated circuit, IC.

The activating circuit 242 may be configured to sense a touch pattern with the touch sensitive area 201-208 and based on the sensed touch pattern activate or trigger the electronic ring-shaped device 120 to sense one or more gestures with the outer touch sensitive area 201-208. The sensed gestures may be used to control another electronic device such as the wearable electronic device 110. For example, the activating circuit 242 may activate **a touch circuit 244** electrically connected to each outer touch sensitive area 201-208 and configured to sense the gesture, such as a gesture to control the wearable electronic device 110.

In other words, the activating circuit 242 may trigger the touch circuit 244 if a specific triggering touch pattern has been sensed.

In some embodiments herein sensing the touch pattern which activates the gesture sensing is based on a resistance measurement between two outer touch sensitive areas, such as between the first outer touch sensitive area 201 and the second outer touch sensitive area 202 and/or between the first outer touch sensitive area 201 and the fifth outer touch sensitive area 205, out of the plurality of outer touch sensitive areas 201-208. The resistance measurement may be made between more than two outer touch sensitive areas 201, 202 out of the plurality of outer touch sensitive areas 201-208. This will be explained in more detail below when describing action 301.

As mentioned above, the electronic ring-shaped device 120 may further comprise the touch circuit 244 electrically connected to each outer touch sensitive area 201-208 and configured to sense the gesture when activated e.g., by the activating circuit 242. The touch circuit 244 may be implemented as a touch IC. The touch circuit 244 reads sensor data and interprets the sensor data from the touch sensitive area 201-208 in order to determine a gesture based on the sensor data. For example, the touch circuit 244 may sense the gesture by detecting changes in a measure related to a capacitance of a respective one of the plurality of outer touch sensitive areas 201-208. In other words, a capacitive touch IC may be used to be able to sense different combinations of capacitive changes and interpret them so that different gestures on the ring may be determined.

The touch circuit 244 may further control power of the touch sensitive area 201-208.

The touch circuit 244 may be electrically connected to the activating circuit 242 such that it can be activated by the activating circuit 242.

In some embodiments herein the touch circuit 244 comprises the activating circuit 242. Thus, the activating circuit 242 may be a low power feature of the touch circuit 244.

In some embodiments herein the electronic ring-shaped device 120 further comprises **an interface communication unit (IF CU) 246.** The IF CU 246 may be a hardware component that gets the gesture data from the touch circuit 244 and communicates the gesture data, e.g., through the communication electrode 224, to other devices, such as the wearable electronic device 110, worn by the user.

The communication technology used by the IF CU 246 may be any communication technology. However as mentioned above, in the scenario where the electronic ring-shaped device 120 controls the wearable device 110 which is in proximity of the electronic ring-shaped device 120 then the communication may be done through IBC or low-power radio in order to reduce the power consumption. For example, the IF CU 246 may be connected with **a radio antenna 248,** comprised in the electronic ring-shaped device 120, which communicate wirelessly with other radio antennas.

The electronic components of the electronic ring-shaped device 120 may operate based on electrical power from a battery comprised in the electronic ring-shaped device 120. The electronic ring-shaped device 120 may further include electrical wires to electrically connect the electrical components of the electronic ring-shaped device 120 for power transfer and communication. In some other embodiments the electrical power and/or the communication is implemented wirelessly.

Figure 2g further illustrates components which may be internal to the wearable device 110. In some embodiments the wearable device 110 comprises **an interface communication unit 256.** The IF CU 256 of the wearable device 110 may be a hardware component that gets the gesture data from the electronic ring-shaped device 120 and communicates the gesture data to the wearable device 110 and possibly to further wearable devices worn by the user.

The wearable device 110 may further comprise **a communication electrode 264,** such as an ICE, for communication with the electronic ring-shaped device 120. The communication electrode 264 may be arranged on a face of the wearable device 110 that is arranged for touching the skin of the user. For example, the communication electrode 264 may be arranged on the backside of the wearable device 110.

The wearable device 110 may be implemented with the same communication technology as the electronic ring-shaped device 120. Thus, the IF CU 256 and the communication electrode 264 may also use IBC. In some other embodiments the IF CU 256 use low-power radio, such as BLE. For example, the IF CU 256 may be connected with **a radio antenna 274,** comprised in the wearable electronic device 110, which communicate wirelessly with other radio antennas, such as the radio antenna 248 of the electronic ring-shaped device 120.

Embodiments herein will now be described in relation to a scenario where the electronic ring-shaped device 120 is configured to control the wearable device 110 by sensing touch and gestures with the touch sensitive areas 201-208. The electronic ring-shaped device 120 is configured to trigger gesture sensing, such as touch-gesture sensing, with the electronic ring-shaped device 120. The sensed gestures may be communicated to the wearable device 110 and the wearable device 110 may use the sensed gesture to control itself, e.g., to control the GUI presented on the display 115 of the wearable device 110. Triggering of the gesture sensing by a pre-determined touch pattern reduces the risk of unwillingly controlling the wearable device 110.

Such a system also provides a power efficient interface to control a smart watch 110 or a smart band 110 with the ring-shaped device 120, e.g., by use of capacitive sensing.

In embodiments herein the control of the wearable device 110 at least partly by the ring-shaped device 120 may also be referred to as a ring UI mode.

Exemplifying embodiments herein will now be described with reference to **Figure 3** and with further reference to Figures 1, Figures 2a-h. Figure 3 illustrates a flowchart describing a method, performed by the electronic ring-shaped device 120.

One or more of the following actions presented in Figure 3 may be performed in the following exemplifying order. In other examples, the order may differ from what is described below.

### Action 301

The ring-shaped device 120 senses a touch pattern of the electronic ring-shaped device 120 with at least the first outer touch sensitive area 201 of the plurality of outer touch sensitive areas 201-208 arranged on the outer face 210 of the electronic ring-shaped device 120. In some embodiments herein, the ring-shaped device 120 senses the touch pattern of the electronic ring-shaped device 120 with at least two outer touch sensitive areas, such as the first outer touch sensitive area 201 and the second outer touch sensitive area 202, of the plurality of outer touch sensitive areas 201-208 arranged on the outer face 210 of the electronic ring-shaped device 120. Sensing the touch pattern may also be referred to as detecting the touch pattern or determining the touch pattern or determining whether or not the touch pattern has been applied to at least the first outer touch sensitive area 201.

Since the electronic ring-shaped device 120 may rotate freely around the finger there may be more than one configuration of the touch pattern that triggers the gesture sensing depending on the ring design. Figure 2a illustrates one example of a ring rotation position or ring configuration. In Figure 2a fingers next to the finger on which the electronic ring-shaped device 120 is arranged are only activating one outer touch sensitive area 201, 205 on each side of the electronic ring-shaped device 120. Here, the outer touch sensitive area 201, 205 on each side of the electronic ring-shaped device 120 is arranged on each side of the electronic ring-shaped device 120 with respect to the finger on which the electronic ring-shaped device 120 is arranged on. In that case, when a finger is positioned so that two consecutive outer touch sensitive area 201, 202 are activated the electronic ring-shaped device 120 may trigger the rest of the outer touch sensitive areas 201-208 to be able to detect a following gesture.

Thus, in Figure 2a the electronic ring-shaped device 120 may detect a first touch on the first outer touch sensitive area 201 due to a first adjacent finger 271 and may detect a further touch on **a further outer touch sensitive area 205** due to **a second adjacent finger 272.** The first adjacent finger 271 may be an index finger. The first and second adjacent fingers 271, 272 are adjacent to the finger that the electronic ring-shaped device 120 is arranged on. Sensing gestures may be triggered by detecting a third touch on the second outer touch sensitive area 202 or the third outer touch sensitive area 203 due to a **third finger 273,** such as a thumb. In Figure 2a the second outer touch sensitive area 202 is adjacent to the first outer touch sensitive area 201, which is convenient for one-handed operation of the electronic ring-shaped device 120 with the thumb. The second outer touch sensitive area 202 and/or the third outer touch sensitive area 203 may further be arranged on a part of the electronic ring-shaped device 120 which is arranged closest to a palm of the hand wearing the electronic ring-shaped device 120 which is convenient for one-handed operation of the electronic ring-shaped device 120 with the thumb.

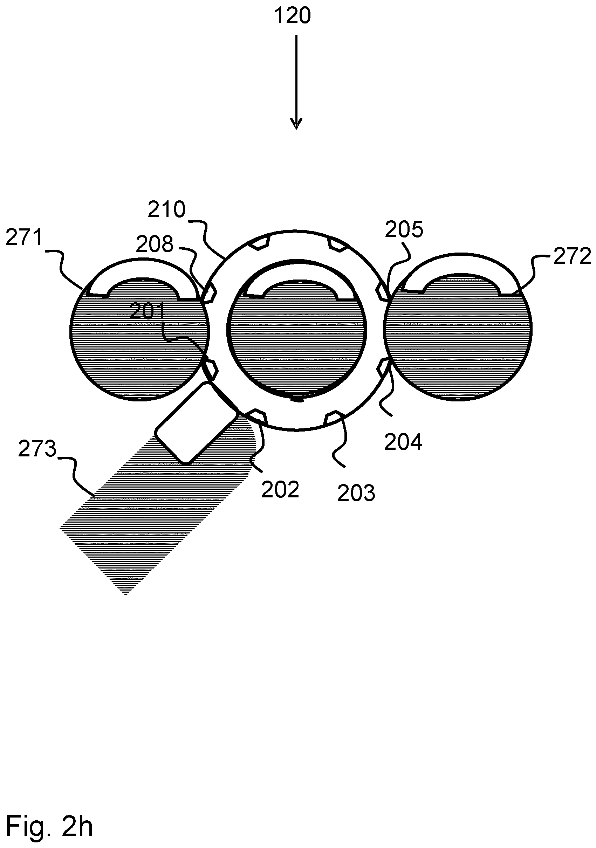

**Figure 2h** illustrates another example of the ring rotation position or ring configuration. If the electronic ring-shaped device 120 is positioned like in Figure 2h, the electronic ring-shaped device 120 will detect touches on a respective two touch sensitive areas 201, 208 and 204, 205 arranged on each side of the electronic ring-shaped device 120 with respect to the finger on which the electronic ring-shaped device 120 is arranged on. As the electronic ring-shaped device 120 detects touches on both sides the electronic ring-shaped device 120 will not trigger sensing of gestures. Only when a touch on a third consecutive outer touch area, such as the third outer touch sensitive area 203, is sensed the electronic ring-shaped device 120 is triggered to sense gestures.

Thus, in Figure 2h the electronic ring-shaped device 120 may detect a first pair of touches on a first pair of outer touch sensitive areas 201, 208 due to the first adjacent finger 271 and detect a second pair of touches on a second pair of outer touch sensitive areas 204, 205 due to the second adjacent finger 272. Sensing gestures may be triggered by detecting a third pair of touches on a third pair of outer touch sensitive areas 201, 202 due to the third finger 273, such as the thumb.

In some embodiments herein the electronic ring-shaped device 120 keeps track of a respective signal from the outer touch sensitive areas 201-208 and will not trigger activation of gesture sensing if similar signals from the outer touch sensitive areas 201-208 are received from the two sides of the ring.

Once the electronic ring-shaped device 120 senses a third touch in proximity to either side of the outer touch sensitive areas 201-208 that already sense a touch, the electronic ring-shaped device 120 will trigger the electronic ring-shaped device 120 to sense gestures with the outer touch sensitive areas 201-208.

For example, if the activating circuit 242 senses a third touch in proximity to either side of the outer touch sensitive areas 201-208 that already sense a touch the activating circuit 244 will trigger the touch circuit 244 to wake up.

This method enables the electronic ring-shaped device 120 to be worn in any rotation as the third finger 273 may identify how the electronic ring-shaped device 120 is rotated. For example, if it is assumed that the third finger 273 is the thumb on the same hand then the knowledge of an anatomy of the hand and which finger the electronic ring-shaped device 120 is worn on may be used to identify how the electronic ring-shaped device 120 is rotated.

Once the ring orientation is found the outer touch sensitive areas 201-208 on the top of the electronic ring-shaped device 120 may be de-activated since the electronic ring-shaped device 120 may expect a touch from the inside of the palm of the hand on which the electronic ring-shaped device 120 is arranged on. The bottom of the electronic ring-shaped device 120 may be defined as a half part of the electronic ring-shaped device 120 which is closer to the palm than the other half part. The top of the ring may thus be defined as a half part of the electronic ring-shaped device 120 which is furthest away from the palm than the other half part.

The embodiments described in relation to Figure 2a and Figure 2h may be combined. For example, after detection of the first touch and the further touch as described in relation to Figure 2a the electronic ring-shaped device 120 may detect the pair of touches on the third pair of outer touch sensitive areas 201, 202 due to the third finger 273. Alternatively, after detection of the first and second pair of touches as described in relation to Figure 2h the electronic ring-shaped device 120 may detect a further touch on for example the second outer touch sensitive area 202 due to the third finger 273.

Based on the above example scenarios further embodiments may be defined according to the following text.

In some embodiments herein the touch pattern comprises at least two simultaneous separate touches. That is, the touch pattern may comprise a respective touch on at least two touch sensitive areas 201, 202. The two touches may be due to touch by two fingers, e.g., a first touch with the first adjacent finger 271 and a second touch with the third finger 273.

Sensing the touch pattern may further comprise sensing a touch from two or more consecutive outer touch sensitive areas, such as the first outer touch sensitive area 201 and the second outer touch sensitive area 202. That is, the consecutive outer touch sensitive areas 201, 202 may be adjacent outer touch sensitive areas meaning that the consecutive touch areas 201, 202 are arranged adjacently on the outer face 210 of the electronic ring-shaped device 120.

In some embodiments sensing the touch pattern comprises sensing an asymmetric response with the plurality of outer touch sensitive areas 201-208, wherein the asymmetric response comprises sensing touch with two or more outer touch sensitive areas 201, 202, 203 which are asymmetrically distributed on the outer face 210 of the electronic ring-shaped device 120.

In some embodiments herein sensing the touch pattern is based on a resistance measurement between two outer touch sensitive areas 201, 202 out of the plurality of outer touch sensitive areas 201-208. The resistance measurements may be made between more than two outer touch sensitive areas 201, 202 out of the plurality of outer touch sensitive areas 201-208. With the ring orientation of Figure 2a as an example, the electronic ring-shaped device 120 may first measure resistance between the first outer touch sensitive area 201 and the fifth outer touch sensitive area 205 to detect touch by the first finger 271 on the first outer touch sensitive area 201 and by the second finger 272 on the fifth outer touch sensitive area 205. Then the electronic ring-shaped device 120 may measure resistance between the first outer touch sensitive area 201 and the second outer touch sensitive area 202 to detect touch by the third finger 273 on the second touch sensitive area 202. In other words, the electronic ring-shaped device 120 may first measure resistance between outer touch sensitive areas arranged on opposite sides of the electronic ring-shaped device 120. If the first resistance measurement indicates that the outer touch sensitive areas arranged on opposite sides of the electronic ring-shaped device 120 are touched then the electronic ring-shaped device 120 may continue to measure resistance between further outer touch sensitive areas. The further outer touch sensitive areas may for example be located adjacent to the outer touch sensitive areas arranged on opposite sides of the electronic ring-shaped device 120 and/or may be located on a palm side of the electronic ring-shaped device 120.

With the ring orientation of Figure 2h as an example, the electronic ring-shaped device 120 may first measure resistance between the first outer touch sensitive area 201 and the eight outer touch sensitive area 208 to detect touch by the first finger 271 on the first and eighth touch sensitive areas 201, 208, and measure resistance between the fourth outer touch sensitive area 204 and the fifth outer touch sensitive area 205 to detect touch by the second finger 272 on the fourth and fifth touch sensitive areas 204, 205. Alternatively, or in combination, the electronic ring-shaped device 120 may also first measure resistance between outer touch sensitive areas arranged on opposite sides of the electronic ring-shaped device 120, such as between the first and fourth touch sensitive areas 201, 204, as described above for the ring orientation of Figure 2a. lf the first resistance measurement indicates that the outer touch sensitive areas arranged on opposite sides of the electronic ring-shaped device 120 are touched then the electronic ring-shaped device 120 may continue to measure resistance between further outer touch sensitive areas also for the ring orientation of Figure 2h.

Sensing the touch pattern may be performed by the activating circuit 242.

Since the activating circuit 242 may be implemented as a low-power circuit the sensing of the touch pattern may be made with low power consumption.

### Action 302a

In some embodiments the electronic ring-shaped device 120 provides an indication that it has sensed the touch pattern to the wearable electronic device 110. That is, the electronic ring-shaped device 120 may provide an indication of its intention to activate gesture sensing, for example to support the ring UI mode.

### Action 302b

In response to sensing the touch pattern the electronic ring-shaped device 120 activates the electronic ring-shaped device 120 to sense a gesture with one or more of the plurality of outer touch sensitive areas 201-208.

In some embodiments wherein the electronic ring-shaped device 120 comprises the touch circuit 244, activating the electronic ring-shaped device 120 to sense the gesture comprises activating the touch circuit 244 to sense the gesture.

For example, the touch circuit 244 may charge and discharge the touch sensitive areas 201-208 and may then measure a time to charge and discharge. A touch on the touch sensitive areas 201-208 changes the time to charge and discharge. The time may be measured to obtain a measure of the touch.

The activating circuit 242 may activate the electronic ring-shaped device 120 to sense the gesture.

In some embodiments herein the activating circuit 242 activates the touch circuit 244, in response to sensing the touch pattern, to sense the gesture.

By activating the electronic ring-shaped device 120 to sense a gesture the number of false positives may be reduced. That is, triggering of the gesture sensing by a pre-determined touch pattern reduces the risk of unwillingly controlling the wearable device 110 by detecting a gesture and communicating it to the host device as a command for a case where the user did not intend to perform that command.

Activating the electronic ring-shaped device 120 to sense the gesture may further be based on an indication of a confirmation of the activation received from the wearable electronic device 110. The confirmation may be in response to the provided indication of the intention to activate gesture sensing. For example, if the electronic ring-shaped device 120 has provided the indication of the intention to activate gesture sensing (e.g. two quick vibrations), the wearable electronic device 110 may need to detect an additional gesture of the user to confirm the ring UI mode. The additional gesture may be a rapid tilt of the arm or hand back-and-forth. When the additional gesture has been detected by the wearable device 110 it may communicate another notification to the electronic ring-shaped device 120 as confirmation (e.g. one quick vibration).

Activating the electronic ring-shaped device 120 to sense the gesture may further be based on data from the motion sensor 114 comprised in the wearable electronic device 110 or a motion sensor comprised in the electronic ring-shaped device 120. The motion sensor may be an IMU or an accelerometer or a magnetometer.

Activating the electronic ring-shaped device 120 to sense the gesture may further be based on an indication that the display 115 of the wearable electronic device 110 is active. The indication that the display 115 of the wearable electronic device 110 is active is received from the wearable electronic device 110. For example, the start trigger may only be enabled when the user interface of the wearable electronic device 110 is activated.

Activating the electronic ring-shaped device 120 to sense the gesture may further be based on touch data from the touch sensitive area 222 arranged on the inner face 220 of the electronic ring-shaped device 120.

In other words, inner touch sensitive areas 222 on the inner face 220 of the electronic ring-shaped device 120 may also be used in combination with the one or more outer touch sensitive areas 201-208 for activating the electronic ring-shaped device 120 to sense gestures with one or more of the plurality of outer touch sensitive areas 201-208 on the outer face 210.

The electronic ring-shaped device 120 may update settings of the activation function, such as pressure thresholds, by training on real touch patterns and receiving feedback from the wearable electronic device 110 or the user. In that way accidental triggering of the gesture sensing is reduced. For example, a closed fist may activate a different set of outer touch sensitive areas 201-208 than only the touch sensitive areas 201-208 required for triggering the gesture sensing and thus the control of the wearable electronic device 110.

### Action 303

In some embodiments the electronic ring-shaped device 120 provides an indication of activating the electronic ring-shaped device 120 to sense the gesture to the wearable electronic device 110.

### Action 304

The electronic ring-shaped device 120 may then sense the gesture with one or more of the plurality of outer touch sensitive areas 201-208. Sensing the gesture may also be referred to as detecting the gesture or determining that the gesture has occurred.

As mentioned above, the plurality of outer touch sensitive areas 201-208 may be capacitive touch sensitive areas. Then sensing the gesture may comprise sensing a change in a measure related to a capacitance of a respective one of the one or more of the plurality of outer touch sensitive areas 201-208. The measure related to the capacitance may be a change in time to charge and/or discharge the plurality of outer touch sensitive areas 201-208. For example, the touch circuit 244 may be configured to sense the gesture by sensing a change in the measure related to the capacitance.

In some embodiments herein the electronic ring-shaped device 120 senses the gesture with a second outer touch sensitive area 202 out of the plurality of outer touch sensitive areas 201-208. The second outer touch sensitive area 202 is arranged on the electronic ring-shaped device 120 within a fraction of a circumference of the electronic ring-shaped device 120 from the at least first outer touch sensitive area 201. The fraction may be a quarter or a third of the circumference of the electronic ring-shaped device 120. The fraction may be in both a clockwise direction and an anti-clockwise direction.

If multiple first outer touch sensitive areas 201, 202 are used to sense the touch pattern which triggers the gesture sensing, then the second outer touch sensitive area 202 may be arranged within the fraction of the circumference from any of the at least first outer touch sensitive areas 201, 202.

Specifically, the second outer touch sensitive area 202 may be arranged within the fraction of the circumference from the outer touch sensitive area 202 that sensed the third touch described above in relation to action 301.

The second outer touch sensitive area 202 may be arranged on a palm side of the electronic ring-shaped device 120. Thus, in some embodiments herein the second outer touch sensitive area 202 is arranged on the palm side of the electronic ring-shaped device 120 within the fraction of the circumference from any of the at least first outer touch sensitive areas 201, 202. In some further embodiments herein, the second outer touch sensitive area 202 is arranged on the palm side of the electronic ring-shaped device 120 within the fraction of the circumference from one of the at least first outer touch sensitive areas 201, 202 which is located on the palm side of the of the electronic ring-shaped device 120.

In some embodiments herein the electronic ring-shaped device 120 senses the gesture with multiple outer touch sensitive areas 202, 203 out of the plurality of outer touch sensitive areas 201-208. Then the multiple outer touch sensitive areas 202, 203 may be arranged on the electronic ring-shaped device 120 within the fraction of the circumference from the at least first outer touch sensitive area 201.

A description of how to select which outer touch sensitive areas that may be configured for gesture sensing is further described below in action 414.

The gesture calculation may be performed by the electronic ring-shaped device 120, for example by the touch circuit 244. Then the electronic ring-shaped device 120 may send a gesture identity to the wearable electronic device 110. This reduces the power consumption of the electronic ring-shaped device 120 and the wearable electronic device 110 since very little data needs to be transferred from the electronic ring-shaped device 120 to the wearable electronic device 110.

### Action 305

In some embodiments herein the electronic ring-shaped device 120 provides an indication of the gesture to the wearable electronic device 110. The indication may identify the gesture. For example, a gesture identity (gesture ID) may be sent to the IF CU 256 of the wearable electronic device 110. This is done to keep the bit rate down and lower the power consumption. One example of a 3-bit gesture i.e., 8 different gestures may be identified, transfer scheme is the following:
1. Swipe left
2. Swipe right
3. Press
4. Long press
5. Swipe up
6. Swipe down
7. Two touch area press
8. Two touch area long press

Other bit lengths may also be used, such as 2 bits or 4 bits. The short press gesture (2. press) may be comparable with a tap. A double-tap may also be detected and potentially sent as one command to the smart watch.

Since a scenario in which embodiments herein may be implemented is that the wearable device 110 is arranged on a same limb as the electronic ring-shaped device 120 the communication power may be kept low. For example, the communication may be done through a body area network, e.g., with IBC, or a low-power radio, such as BLE.

As mentioned above the electronic ring-shaped device 120 may comprise the ICE 224 on the inner face 220 of the electronic ring-shaped device 120. Then the ICE 224 may be used to communicate with the wearable electronic device 110 via in-body communication, IBC.

### Action 306

The electronic ring-shaped device 120 may de-activate the electronic ring-shaped device 120 to sense the gesture in response to not sensing the gesture during a time period.

### Further detailed examples

Further embodiments will now be described with respect to flow charts in **Figure 4a** and **Figure 4d****.**

The electronic ring-shaped device 120 may be turned on once the electronic ring-shaped device 120 is put on the finger.

Further, a pairing procedure to pair the electronic ring-shaped device 120 with another electronic device, such as the wearable electronic device 110 may be performed when the ring-shaped device 120 is put on the finger. The paring may be performed either by IBC, or any other low-power interface that could be used. Pairing using IBC is effective since both devices are positioned on the same arm and in close proximity and this may be done automatically. If there is no response from the host the pairing will be aborted. The wearable electronic device 110 may be the host.

If the electronic ring-shaped device 120 is removed from the finger, or if the wearable electronic device 110, such as a smart watch, is removed from the arm, the pairing may be ended.

**Figure 4a** illustrates a calibration process of the electronic ring-shaped device 120.

### Action 401

The calibration process may comprise the pairing procedure described above.

Calibration may be needed if some time has elapsed since last usage, or if the ring-shaped device 120 has rotated since the last calibration.

### Action 402

After pairing gesture sensing is enabled. For example, the touch circuit 244 powers up in normal mode wherein it may sense gestures with one or more touch sensitive areas 201-208.

### Action 403

In some embodiments herein the electronic ring-shaped device 120 senses touch with some or all outer touch sensitive areas 201-208 in order to be able to calibrate the rotation. In other words, depending on the rotation of the electronic ring-shaped device 120, the electronic ring-shaped device 120 may scan some or all of the outer touch sensitive areas 201-208 for detecting touch in an activation mode. In one example method of calibrating the rotation of the electronic ring-shaped device 120, the electronic ring-shaped device 120 behaves like a state machine.

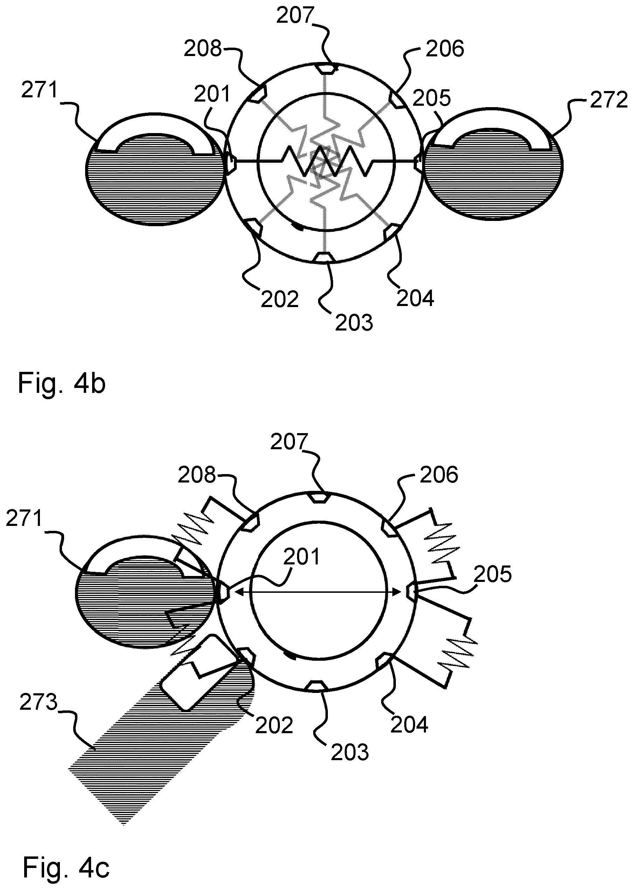

In an example illustrated in **Figure 4b****,** the electronic ring-shaped device 120 measures resistance between two of the outer touch sensitive areas 201-208 on opposing sides of the electronic ring-shaped device 120, such as between the first outer touch sensitive area 201 and the fifth outer touch sensitive area 205. This is indicated in Figure 4b by the resistor symbol. In Figure 4b there are 4 pairs of touch sensitive areas on opposing sides: the first outer touch sensitive area 201 and the fifth outer touch sensitive area 205, the second outer touch sensitive area 202 and the sixth outer touch sensitive area 206, the third outer touch sensitive area 203 and the seventh outer touch sensitive area 207 and the fourth outer touch sensitive area 204 and the eighth outer touch sensitive area 208. Thus, four measurements of resistance between opposing outer touch sensitive areas may be made. When the first and second fingers 271, 272 touch the first and fifth outer touch sensitive areas 201, 205, as illustrated in Figure 4b, the resistance between these outer touch sensitive areas may go down such that it is considerably lower than for the other opposing pairs of outer touch sensitive areas. This will indicate that the electronic ring-shaped device 120 is on a finger and it may also give a first indication of the rotation. Thus, it may be determined that the first and second fingers 271, 272 touch the first and the fifth outer touch sensitive areas 201, 205 by measuring the resistance according to the above scheme, e.g., by measuring the resistance between a respective pair of the outer touch sensitive areas 201-208 on opposing sides of the electronic ring-shaped device 120. That is, the two outer touch sensitive areas that make up the respective pair are arranged on opposing sides of the electronic ring-shaped device 120.

A next state is to check what side is towards the palm. This is illustrated in **Figure 4c****.** That may be done by checking a resistance between a respective one of the two opposing outer touch sensitive areas which were determined to be touched by the first and second fingers 271, 272 above and the outer touch sensitive areas next to the determined two opposing outer touch sensitive areas. The determined two opposing outer touch sensitive areas are indicated in Figure 4b with a double-headed arrow. For example, as illustrated in Figure 4c the electronic ring-shaped device 120 may measure the resistance between the first outer touch sensitive area 201 and the second outer touch sensitive area 202, between the first outer touch sensitive area 201 and the eighth outer touch sensitive area 208, between the fifth outer touch sensitive area 205 and the fourth outer touch sensitive area 204 and between the fifth outer touch sensitive area 205 and the sixth outer touch sensitive area 206. When the third finger 273 touches the second outer touch sensitive area 202 while the first finger 271 touches the first outer touch sensitive area 201, as illustrated in Figure 4c, the resistance between the first outer touch sensitive area 201 and the second outer touch sensitive area 202 may go down such that it is considerably lower than for the other pairs of outer touch sensitive areas for which the resistance measurements of Figure 4c apply, such as the first and eight, the fifth and fourth, and the fifth and sixth.

Then when the electronic ring-shaped device 120 has determined what part is towards the palm that may then trigger the touch circuit 244 to activate the outer touch sensitive areas towards the palm, such as the second outer touch sensitive area 202, the third outer touch sensitive area 203 and the fourth outer touch sensitive area 204 for gesture recognition. This is related to the description of Figure 4d and actions 413 and 414 below.

### Action 404

Then the calibration process may determine the rotation of the electronic ring-shaped device 120 on the finger to determine what configuration the activating circuit 242 should be set to. The determination of the rotation configuration may be based on the measurements of touch performed in action 403 above. A couple of example rotation configurations have been described above. For example, the electronic ring-shaped device 120 arranged according to Figure 2b may correspond to a first configuration while the electronic ring-shaped device 120 arranged according to Figure 2c may correspond to a second configuration. The activation of the gesture sensing by the activating circuit is described further in action 413 below.

### Action 405

In some embodiments the electronic ring-shaped device 120 checks whether the rotation position is valid. For example, if the distribution of the outer touch sensitive areas 201-208 with respect to the first and second adjacent fingers 271, 272 is asymmetric, then the rotation position may be invalid. An invalid rotation position may lead to that touch from the first and second adjacent fingers 271, 272 is not sensed as a symmetric touch pattern.

### Action 406

The electronic ring-shaped device 120 may notify the wearable electronic device 110 about the invalid rotation position such that the wearable electronic device 110 may notify the user about the invalid rotation position. The user may then adjust the rotation of the electronic ring-shaped device 120.

### Action 407

When the wearable electronic device 110 has been notified of the invalid rotation position the electronic ring-shaped device 120 waits for confirmation from the wearable electronic device 110. The confirmation may comprise an indication that the wearable electronic device 110 is paired and is ready to be controlled. The confirmation may be based on user input.

### Action 408

If no confirmation is received from the wearable electronic device 110 the electronic ring-shaped device 120 may be turned off.

A process flow of controlling the wearable electronic device 110 based on sensed gestures by the electronic ring-shaped device 120 is shown in **Figure 4d****.**

### Action 411

The electronic ring-shaped device 120 may calibrate the rotation as described above in relation to Figure 4a.

### Action 412

After a successful calibration process the electronic ring-shaped device 120 is put in a low power state and waits for the activating circuit 242 to trigger gesture sensing. Setting the electronic ring-shaped device 120 in the low-power state may comprise setting any of the outer touch sensitive areas 201-208, the touch circuit 244 and the IF CU 246 in a low-power state.

### Action 413

As mentioned above when describing action 301, sensing the touch pattern may be based on the resistance measurement between two or more outer touch sensitive areas 201, 202 out of the plurality of outer touch sensitive areas 201-208.

For example, at certain intervals the activating circuit 242 may evaluate if there is a short circuit between two outer touch sensitive areas 201, 202. Thus, a measurement is performed to check if there is a connection between two or three outer touch sensitive areas 201, 202 through the conductivity of the touching object, such as the skin of the user.

However, there are many situations where the fingers are close to each other without the intention to control another device. This may happen when the hand is in a resting state, a closed fist, or when gripping something. Then the electronic ring-shaped device 120 may register a false positive. That is, the electronic ring-shaped device 120 may trigger the gesture sensing when the user did not intend to do so. The following embodiments will present different solutions to this problem. Generally, the above described trigger to start sensing gestures based on the sensed touch pattern may be combined with other triggers to provide a more robust start trigger.

In one embodiment, a start trigger is detected by the electronic ring-shaped device 120 as described above. The start trigger may be combined with a gesture of the arm, e.g. a rapid tilt back-and-forth. Such a distinct gesture may be detected by either the above-mentioned motion sensor, such as an IMU or accelerometer, of the wearable electronic device 110 or the electronic ring-shaped device 120.

In one embodiment, the start trigger is only enabled when the display 115 of the wearable electronic device 110 is activated. The display 115 may be triggered by an arm movement making the display 115 viewable to the user. The reception of a message or any other system notification, or a call may also enable the start trigger.

In one embodiment, a system comprising the electronic ring-shaped device 120 and the wearable electronic device 110 has learned typical other hand positions or gestures than the ones that should trigger the gesture sensing from how they activate the touch sensitive areas 201-208, 222 on the electronic ring-shaped device 120. For example, a closed fist would likely activate a different set of touch sensitive areas 201-208, 222 than only the ones used for starting one-handed operation, both on the outside but also by the pressure of different touch sensitive areas on the inside of the electronic ring-shaped device 120. By learning such gestures or hand positions that are not meant to trigger the gesture sensing, those gestures may be filtered out from the starting trigger of the one-handed operation.

In one embodiment, the trigger of the gesture sensing, which may be part of a ring UI mode, is notified in the wearable electronic device 110, e.g. by two quick vibrations. This makes the user aware that the gesture sensing has triggered, either as an intentional activation or involuntary. In the latter case, this allows the user to rapidly turn off the ring UI mode and use the sensor input data for the learning process.

In one embodiment, when the wearable electronic device 110 has notified the user, such as with two quick vibrations, the user may need to do an additional gesture to confirm the ring UI mode. The additional gesture may be sensed by the wearable electronic device 110. This additional gesture may be a rapid tilt of the arm or hand back-and-forth, which may be followed by another notification from the wearable electronic device 110 as confirmation, such as one quick vibration. The absence of such a confirmation gesture within a certain amount of time, such as 1 second, implies that the ring UI mode is not activated. Then, at involuntary activation of the trigger event, the user simply avoids the confirmation gesture. Thus, if the electronic ring-shaped device 120 does not receive a confirmation from the wearable electronic device 110 the electronic ring-shaped device 120 does not trigger gesture sensing although the electronic ring-shaped device 120 sensed the triggering touch pattern.

The wearable electronic device 110 and/or the electronic ring-shaped device 120 may turn off the ring UI mode based on sensing a similar gesture as the one that turns on the mode. However, the gesture that turns off the ring UI mode may also differ from the gesture that turns on the mode.

It should be noted that above examples of confirmation gestures or notifications are only examples, and other methods may be used.

### Action 414

Once enough touch sensitive areas are covered the activating circuit 242 triggers gesture sensing and the touch circuit 244 powers up in normal mode.

In some embodiments herein the touch circuit 244 sense all the touch sensitive areas at the same side as the activating circuit 242 was triggered to determine if any gesture is performed. For example, if the third finger 273 triggers the activation of the touch circuit 244 by touching the second touch sensitive area 202 arranged on the palm side of the electronic ring-shaped device 120, then the touch circuit 244 may be configured to sense gestures with the outer touch sensitive areas on the palm side, such as any one or more of the first to the fifth outer touch sensitive areas 201-205.

### Action 415

The electronic ring-shaped device 120 may check if a gesture is performed. If no gesture is detected within a certain amount of time (for example in the range of a fraction of a second) the touch circuit 244 may revert to low power mode and the activating circuit 242 may be operational again to sense the touch pattern in order to trigger activation of the touch circuit 244.

### Action 416

Once a gesture is performed and registered the electronic ring-shaped device 120 may determine what gesture it was and send a corresponding bit stream over the interface to the paired electronic device, such as the wearable electronic device 110. The touch circuit 244 may determine what gesture it was and send the corresponding bit stream.

### Action 417

In some embodiments herein the touch circuit 244 is reset and is ready to sense a new gesture.

If no gesture is detected within a certain amount of time (for example in the range of milliseconds) the touch circuit 244 may revert to low power mode and the activating circuit 242 may be operational again to sense a new touch pattern in order to trigger activation of the touch circuit 244.

In summary, various embodiments above disclose techniques for controlling a smart watch or a smart wrist band. The communication technology used between the electronic ring-shaped device 120 and the wearable electronic device 110 may be suitable for short range and low power. Further, use of in-body communication is less prone to pairing difficulties or interference, since the electronic ring-shaped device 120 and the smart watch are placed on the same arm. The disclosed embodiments avoid the problems of limited relative finger movements if the user should look at the smart watch on the arm at the same time, and is substantially more robust in that they do not rely on determining gestures from the motion of the finger or arm simultaneously as the user is in action.

Compared to prior-art ring devices based on small touch pads, the proposed embodiments of the electronic ring-shaped device 120 may be made much smaller. This enables many more ring designs and is far less clumsy.

Furthermore, in some of the proposed embodiments only the code of the identified gesture is sent to the smart watch or other host device which minimizes the traffic and bandwidth needs, thus reduces power consumption of the system.

The proposed approaches for minimizing the number of false positives without reducing the sensitivity to detect gestures leads to a robust solution for one-handed input.

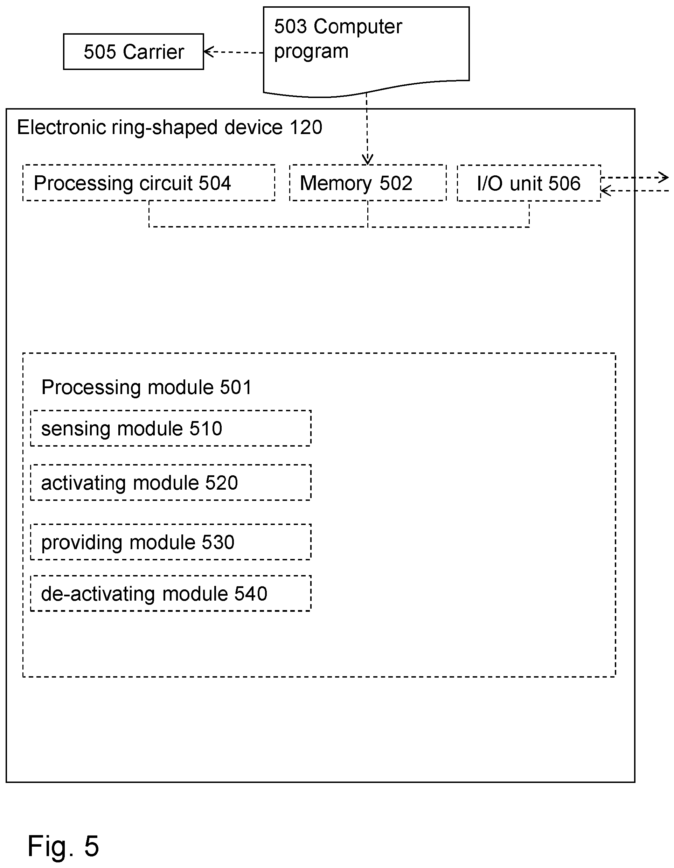

**Figure 5** illustrates a schematic block diagram of embodiments of the wearable electronic ring-shaped device 120. As mentioned above, the electronic ring-shaped device 120 comprises the plurality of outer touch sensitive areas 201-208 arranged on the outer face 210 of the electronic ring-shaped device 120.

The electronic ring-shaped device 120 may comprise a **processing module 501** for performing the above method actions. The processing module 501 may comprise a **sensing module 510** to, e.g. sense the touch pattern.

The processing module 501 may comprise **an activating module 520** to, e.g. activate gesture sensing.

The processing module 501 may comprise **a providing module 530** to, e.g. provide notifications of trigger signals and/or indications of gestures.

The processing module 501 may comprise **a de-activating module 540** to, e.g. de-activate the gesture sensing.

The electronic ring-shaped device 120 may further be configured to, e.g. by means of the sensing module 510, sense the touch pattern of the electronic ring-shaped device 120 with at least the first outer touch sensitive area 201 of the plurality of outer touch sensitive areas 201-208.

The electronic ring-shaped device 120 may further be configured to, e.g. by means of the activating module 520, activate the electronic ring-shaped device 120 to sense a gesture with the one or more of the plurality of outer touch sensitive areas 201-208 in response to sensing the touch pattern.

In some embodiments the electronic ring-shaped device 120 further comprises the activating circuit 242 electrically connected to each outer touch sensitive area 201-208 and configured to sense the touch pattern and activate the electronic ring-shaped device 120 to sense the gesture.

In some embodiments the wearable electronic ring-shaped device 120 further comprises the touch circuit 244 electrically connected to each outer touch sensitive area 201-208. Then the touch circuit 242 is configured to sense the gesture.

The activating circuit 242 may be configured to activate the touch circuit 244, in response to the sensed touch pattern, to sense the gesture. That is, in response to the sensed touch pattern, the activating circuit 242 may activate the touch circuit 244 to sense the gesture.

The electronic ring-shaped device 120 may further be configured to, e.g. by means of the activating module 520, sensing the touch pattern is based on a resistance measurement between two outer touch sensitive areas 201, 202 out of the plurality of outer touch sensitive areas 201-208.

In some embodiments the electronic ring-shaped device 120 is further configured to, e.g. by means of the activating module 520, sense the touch pattern by sensing an asymmetric response with the plurality of outer touch sensitive areas 201-208. The asymmetric response comprises sensing touch with two or more outer touch sensitive areas 201, 202, 203 which are asymmetrically distributed on the outer face 210 of the electronic ring-shaped device 110.

In some other embodiments the electronic ring-shaped device 120 is further configured to, e.g. by means of the activating module 520, sense the touch pattern by sensing a touch from two or more consecutive outer touch sensitive areas 201, 202.

The touch pattern may comprise at least two simultaneous separate touches.

In some embodiments wherein the plurality of outer touch sensitive areas 201-208 are capacitive touch sensitive areas the electronic ring-shaped device 120 is further configured to, e.g. by means of the activating module 520, sense the gesture by sensing a change in the measure related to the capacitance of the respective one of the one or more of the plurality of outer touch sensitive areas 201-208.

In some embodiments herein the electronic ring-shaped device 120 is further configured to, e.g. by means of the activating module 520, sense the gesture with the second outer touch sensitive area 202 out of the plurality of outer touch sensitive areas 201-208. The second outer touch sensitive area 204 is arranged on the electronic ring-shaped device 120 within a fraction of the circumference of the electronic ring-shaped device 120 from the at least first outer touch sensitive area 201.

In some embodiments herein the electronic ring-shaped device 120 is further configured to, e.g. by means of the activating module 520, activate the electronic ring-shaped device 120 to sense the gesture further based on any of:
the indication of the confirmation of the activation received from the wearable electronic device 110;
data from the motion sensor 114 comprised in the wearable electronic device 110 or a motion sensor comprised in the electronic ring-shaped device 120;
the indication that the display 115 of the wearable electronic device 110 is active, wherein the indication is received from the wearable electronic device 110; and
touch data from the inner touch sensitive area 222 arranged on the inner face 220 of the electronic ring-shaped device 120.

The electronic ring-shaped device 120 may further be configured to, e.g. by means of the providing module 530, provide the indication of activating the electronic ring-shaped device 120 to sense the gesture to the wearable electronic device 110, and provide the indication of the gesture to the wearable electronic device 110.

The electronic ring-shaped device 120 may further be configured to, e.g. by means of the communication electrode 224, communicate with a wearable electronic device 110 via IBC.

The electronic ring-shaped device 120 may further be configured to, e.g. by means of the de-activating module 540, de-activate the electronic ring-shaped device 120 to sense the gesture in response to not sensing the gesture during a time period.

The embodiments herein may be implemented through a **processing circuit 504,** e.g. comprising one or more processors, in the electronic ring-shaped device 120 depicted in **Figure 5****,** together with computer program code, e.g. a computer program, for performing the functions and actions of the embodiments herein.

The processing circuit 504 may comprise the activating circuit 242 and/or the touch circuit 244.

The program code mentioned above may also be provided as a computer program product, for instance in the form of a data carrier carrying computer program code for performing the embodiments herein when being loaded into the electronic ring-shaped device 120. One such carrier may be in the form of a CD ROM disc. It is however feasible with other data carriers such as a memory stick. The computer program code may furthermore be provided as pure program code on a server and downloaded to the electronic ring-shaped device 120.

The electronic ring-shaped device 120 may further comprise a **memory 502** comprising one or more memory units. The memory 502 comprises instructions executable by the processing circuit in the electronic ring-shaped device 120. The memory 502 is arranged to be used to store e.g. information, indications, data, configurations, and applications to perform the methods herein when being executed in the electronic ring-shaped device 120. The memory 502 may be a non-volatile memory e.g., NAND, from which the electronic ring-shaped device 120 may load its program and relevant data. Updates of the software may be transferred via a wireless connection.

In some embodiments, a **computer program 503** comprises instructions, which when executed by the processing circuit 504, cause the processing circuit 504 of the electronic ring-shaped device 120 to perform any of the method actions above.

In some embodiments, a **carrier 505** comprises the respective computer program 503, wherein the carrier 505 is one of an electronic signal, an optical signal, an electromagnetic signal, a magnetic signal, an electric signal, a radio signal, a microwave signal, or a computer-readable storage medium.

To perform the method actions above, the electronic ring-shaped device 120 may comprise **an Input and Output (I/O) unit 506.** The I/O unit 506 may comprise or be configured to communicate with e.g., the IF CU 246.

Those skilled in the art will appreciate that the modules and/or units in the electronic ring-shaped device 120 described above may refer to a combination of analog and digital circuits, and/or one or more processors configured with software and/or firmware, e.g., stored in the electronic ring-shaped device 120, that when executed by, e.g., the processing circuit 501, above causes the electronic device to perform the method actions above. The processing circuit 501, which may comprise the activating circuit 242 and/or the touch circuit 244, as well as other digital hardware, may be included in a single hardwired logic such as an Application-Specific Integrated Circuitry (ASIC), or several processors and various digital hardware may be distributed among several separate components, whether individually packaged or assembled into a system-on-a-chip (SoC).

As used herein, the term "module" may refer to one or more functional modules, each of which may be implemented as one or more hardware modules and/or one or more software modules and/or a combined software/hardware module. In some examples, the module may represent a functional unit realized as software and/or hardware.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing module" may include one or more hardware modules, one or more software modules or a combination thereof. Any such module, be it a hardware, software or a combined hardware-software module, may be a sensing means, an activating means, providing means, de-activating means or the like as disclosed herein. As an example, the expression "means" may be a module corresponding to the modules listed above in conjunction with the figures.

As used herein, the term "software module" may refer to a software application, a Dynamic Link Library (DLL), a software component, a software object, an object according to Component Object Model (COM), a software component, a software function, a software engine, an executable binary software file or the like.

The terms "processing module" or "processing circuit" may herein encompass a processing unit, comprising e.g. one or more processors, an Application Specific integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, Random Access Memory (RAM) or the like. Furthermore, the term "memory" may refer to an internal register memory of a processor or the like.

As used herein, the term "computer readable medium" may be a Universal Serial Bus (USB) memory, a DVD-disc, a Blu-ray disc, a software module that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

As used herein, the terms "number" and/or "value" may be any kind of number, such as binary, real, imaginary or rational number or the like. Moreover, "number" and/or "value" may be one or more characters, such as a letter or a string of letters. "Number" and/or "value" may also be represented by a string of bits, i.e. zeros and/or ones.

As used herein, the expression "in some embodiments" has been used to indicate that the features of the embodiment described may be combined with any other embodiment disclosed herein.

Even though embodiments of the various aspects have been described, many different alterations, modifications and the like thereof will become apparent for those skilled in the art. The described embodiments are therefore not intended to limit the scope of the present disclosure.

## Claims

1. A method, performed by a wearable electronic ring-shaped device (120) comprising a plurality of outer touch sensitive areas (201-208) arranged on an outer face (210) of the electronic ring-shaped device (120), the method comprising:
*sensing* (301) a touch pattern of the electronic ring-shaped device (120) with at least a first outer touch sensitive area (201, 202) of the plurality of outer touch sensitive areas (201-208); and
**characterized by**:
in response to sensing the touch pattern *activating* (302b) the electronic ring-shaped device (120) to sense a gesture with one or more of the plurality of outer touch sensitive areas (201-208).

2. The method according to claim 1, wherein the electronic ring-shaped device (120) further comprises an activating circuit (242) electrically connected to each outer touch sensitive area (201-208) and wherein sensing the touch pattern and activating the electronic ring-shaped device (120) to sense the gesture is performed by the activating circuit (242).

3. The method according to claim 1 or 2, wherein the electronic ring-shaped device (120) further comprises a touch circuit (244) electrically connected to each outer touch sensitive area (201-208) and configured to sense the gesture when activated, and wherein activating the electronic ring-shaped device (120) to sense the gesture comprises activating the touch circuit (244) to sense the gesture.

4. The method according to claim 3, wherein the activating circuit (242) activates the touch circuit (244), in response to sensing the touch pattern, to sense the gesture.

5. The method according to any of the claims 1-4, wherein sensing the touch pattern is based on a resistance measurement between two outer touch sensitive areas (201, 202) out of the plurality of outer touch sensitive areas (201-208).

6. The method according to any of the claims 1-5, wherein sensing the touch pattern comprises sensing an asymmetric response with the plurality of outer touch sensitive areas (201-208), wherein the asymmetric response comprises sensing touch with two or more outer touch sensitive areas (201, 202, 203) which are asymmetrically distributed on the outer face (210) of the electronic ring-shaped device (110).

7. The method according to any of the claims 1-6, wherein sensing the touch pattern comprises sensing a touch from two or more consecutive outer touch sensitive areas (201, 202).

8. The method according to any of the claims 1-7, wherein the touch pattern comprises at least two simultaneous separate touches.

9. The method according to any of the claims 1-8, wherein the plurality of outer touch sensitive areas (201-208) are capacitive touch sensitive areas and sensing the gesture comprises sensing a change in a measure related to a capacitance of a respective one of the one or more of the plurality of outer touch sensitive areas (201-208).

10. The method according to any of the claims 1-9, further comprising:
*sensing* (304) the gesture with a second outer touch sensitive area (202) out of the plurality of outer touch sensitive areas (201-208) which second outer touch sensitive area (204) is arranged on the electronic ring-shaped device (120) within a fraction of a circumference of the electronic ring-shaped device (120) from the at least first outer touch sensitive area (201, 202).

11. The method according to any of the claims 1-10, further comprising:
*providing* (303) an indication of activating the electronic ring-shaped device (120) to sense the gesture to a wearable electronic device (110); and
*providing* (305) an indication of the gesture to the wearable electronic device (110).

12. The method according to any of the claims 1-11, wherein activating the electronic ring-shaped device (120) to sense the gesture is further based on any of:
an indication of a confirmation of the activation received from the wearable electronic device (110);
data from a motion sensor (114) comprised in the wearable electronic device (110) or in the electronic ring-shaped device (120);
an indication that a display (115) of the wearable electronic device (110) is active, wherein the indication is received from the wearable electronic device (110); and
touch data from an inner touch sensitive area (222) arranged on an inner face (220) of the electronic ring-shaped device (120).

13. The method according to any of the claims 1-12, further comprising:
*de-activating* (306) the electronic ring-shaped device (120) to sense the gesture in response to not sensing the gesture during a time period.

14. A wearable electronic ring-shaped device (120), wherein the electronic ring-shaped device (120) comprises a plurality of outer touch sensitive areas (201-208) arranged on an outer face (210) of the electronic ring-shaped device (120), and wherein the electronic ring-shaped device (120) is configured to:
sense a touch pattern of the electronic ring-shaped device (120) with at least a first outer touch sensitive area (201, 202) of the plurality of outer touch sensitive areas (201-208); and
**characterized in that** the electronic ring-shaped device (120) is further configured to:
in response to the sensed touch pattern activate the electronic ring-shaped device (120) to sense a gesture with the plurality of outer touch sensitive areas (201-208).

15. The wearable electronic ring-shaped device (120) according to claim 14 configured to perform the method according to any one of claims 3-13.

16. The wearable electronic ring-shaped device (120) according to any one of claims 14-15, wherein the electronic ring-shaped device (120) further comprises an activating circuit (242) electrically connected to each touch sensitive area (201-208) and configured to sense the touch pattern and activate the electronic ring-shaped device (120) to sense the gesture.

17. The wearable electronic ring-shaped device (120) according to any one of claims 14-16, wherein the electronic ring-shaped device (120) further comprises a touch circuit (244) electrically connected to each touch sensitive area (201-208) and wherein the touch circuit (242) is configured to sense the gesture.

18. The wearable electronic ring-shaped device (120) according to claim 17, wherein the activating circuit (242) is configured to activate the touch circuit (244), in response to the sensed touch pattern, to sense the gesture.

19. The wearable electronic ring-shaped device (120) according to any one of claims 14-18, wherein the touch circuit (244) comprises the activating circuit (242).

20. The wearable electronic ring-shaped device (120) according to any one of claims 14-19, further comprising a communication electrode (224) on the inner face (220) of the electronic ring-shaped device (120) wherein the communication electrode (224) is used to communicate with a wearable electronic device (110) via in-body communication, IBC.

21. The wearable electronic ring-shaped device (120) according to any one of claims 14-20, wherein the wearable electronic device (110) is any of a smart watch, a mobile phone, a headset, electronic clothing and an electronic eyewear or any combination of the smart watch, the mobile phone, the headset, electronic clothing and the electronic eyewear.

22. A computer program (503), comprising computer readable code units which when executed on a wearable electronic ring-shaped device (120) according to any one of claims 14-21 causes the wearable electronic ring-shaped device (120) to perform the method according to any one of claims 1-9.

23. A carrier (505) comprising the computer program according to the preceding claim, wherein the carrier (505) is one of an electronic signal, an optical signal, a radio signal and a computer readable medium.

## Patentansprüche

1. Verfahren, das von einer am Körper tragbaren ringförmigen elektronischen Vorrichtung (120) durchgeführt wird, die eine Mehrzahl von äußeren berührungsempfindlichen Bereichen (201-208) umfasst, die auf einer Außenfläche (210) der ringförmigen elektronischen Vorrichtung (120) angeordnet sind, wobei das Verfahren Folgendes umfasst:
Erfassen (301) eines Berührungsmusters der ringförmigen elektronischen Vorrichtung (120) mit mindestens einem ersten äußeren berührungsempfindlichen Bereich (201, 202) der Mehrzahl von äußeren berührungsempfindlichen Bereichen (201-208); und
**gekennzeichnet durch**:
Aktivieren (302b) der ringförmigen elektronischen Vorrichtung (120) in Reaktion auf das Erfassen des Berührungsmusters zum Erfassen einer Geste mit einem oder mehreren der Mehrzahl von äußeren berührungsempfindlichen Bereichen (201-208).

2. Verfahren nach Anspruch 1, wobei die ringförmige elektronische Vorrichtung (120) ferner eine Aktivierungsschaltung (242) umfasst, die elektrisch mit jedem äußeren berührungsempfindlichen Bereich (201-208) verbunden ist, und wobei das Erfassen des Berührungsmusters und Aktivieren der ringförmigen elektronischen Vorrichtung (120) zum Erfassen der Geste von der Aktivierungsschaltung (242) durchgeführt wird.

3. Verfahren nach Anspruch 1 oder 2, wobei die ringförmige elektronische Vorrichtung (120) ferner eine Berührungsschaltung (244) umfasst, die elektrisch mit jedem äußeren berührungsempfindlichen Bereich (201-208) verbunden und dazu konfiguriert ist, die Geste zu erfassen, wenn aktiviert, und wobei das Aktivieren der ringförmigen elektronischen Vorrichtung (120) zum Erfassen der Geste Aktivieren der Berührungsschaltung (244) zum Erfassen der Geste umfasst.

4. Verfahren nach Anspruch 3, wobei die Aktivierungsschaltung (242) die Berührungsschaltung (244) in Reaktion auf das Erfassen des Berührungsmusters zum Erfassen der Geste aktiviert.

5. Verfahren nach einem der Ansprüche 1-4, wobei das Erfassen des Berührungsmusters auf einer Widerstandsmessung zwischen zwei äußeren berührungsempfindlichen Bereichen (201, 202) aus der Mehrzahl von äußeren berührungsempfindlichen Bereichen (201-208) basiert.

6. Verfahren nach einem der Ansprüche 1-5, wobei das Erfassen des Berührungsmusters Erfassen einer asymmetrischen Reaktion mit der Mehrzahl von äußeren berührungsempfindlichen Bereichen (201-208) umfasst, wobei die asymmetrische Reaktion Erfassen einer Berührung mit zwei oder mehr äußeren berührungsempfindlichen Bereichen (201, 202, 203) umfasst, die asymmetrisch auf der Außenfläche (210) der ringförmigen elektronischen Vorrichtung (110) verteilt sind.

7. Verfahren nach einem der Ansprüche 1-6, wobei das Erfassen des Berührungsmusters Erfassen einer Berührung von zwei oder mehr aufeinanderfolgenden äußeren berührungsempfindlichen Bereichen (201, 202) umfasst.

8. Verfahren nach einem der Ansprüche 1-7, wobei das Berührungsmuster mindestens zwei gleichzeitige getrennte Berührungen umfasst.

9. Verfahren nach einem der Ansprüche 1-8, wobei die Mehrzahl von äußeren berührungsempfindlichen Bereichen (201-208) kapazitive berührungsempfindliche Bereiche sind und das Erfassen der Geste Erfassen einer Änderung einer Messgröße bezüglich einer Kapazität eines jeweiligen des einen oder der mehreren der Mehrzahl von äußeren berührungsempfindlichen Bereichen (201-208) umfasst.

10. Verfahren nach einem der Ansprüche 1-9, ferner umfassend:
Erfassen (304) der Geste mit einem zweiten äußeren berührungsempfindlichen Bereich (202) aus der Mehrzahl von äußeren berührungsempfindlichen Bereichen (201-208), wobei der zweite äußere berührungsempfindliche Bereich (204) auf der ringförmigen elektronischen Vorrichtung (120) innerhalb eines Bruchteils eines Umfangs der ringförmigen elektronischen Vorrichtung (120) von dem mindestens ersten äußeren berührungsempfindlichen Bereichen (201, 202) angeordnet ist.

11. Verfahren nach einem der Ansprüche 1-10, ferner umfassend:
Bereitstellen (303) einer Angabe des Aktivierens der ringförmigen elektronischen Vorrichtung (120) zum Erfassen der Geste für eine am Körper tragbare elektronische Vorrichtung (110); und
Bereitstellen (305) einer Angabe der Geste für die am Körper tragbare elektronische Vorrichtung (110).

12. Verfahren nach einem der Ansprüche 1-11, wobei das Aktivieren der ringförmigen elektronischen Vorrichtung (120) zum Erfassen der Geste ferner auf einem von Folgenden basiert:
einer Angabe einer Bestätigung der Aktivierung, die von der am Körper tragbaren elektronischen Vorrichtung (110) empfangen wird;
Daten von einem Bewegungssensor (114), der in der am Körper tragbaren elektronischen Vorrichtung (110) oder in der ringförmigen elektronischen Vorrichtung (120) umfasst ist;
einer Angabe, dass eine Anzeige (115) der am Körper tragbaren elektronischen Vorrichtung (110) aktiv ist, wobei die Angabe von der am Körper tragbaren elektronischen Vorrichtung (110) empfangen wird; und
Berührungsdaten von einem inneren berührungsempfindlichen Bereich (222), der auf einer Innenfläche (220) der ringförmigen elektronischen Vorrichtung (120) angeordnet ist.

13. Verfahren nach einem der Ansprüche 1-12, ferner umfassend:
Deaktivieren (306) der ringförmigen elektronischen Vorrichtung (120) zum Erfassen der Geste in Reaktion darauf, dass während eines Zeitraums keine Geste erfasst wird.

14. Am Körper tragbare ringförmige elektronische Vorrichtung (120), wobei die ringförmige elektronische Vorrichtung (120) eine Mehrzahl von äußeren berührungsempfindlichen Bereichen (201-208) umfasst, die auf einer Außenfläche (210) der ringförmigen elektronischen Vorrichtung (120) angeordnet sind, und wobei die ringförmige elektronische Vorrichtung (120) zu Folgendem konfiguriert ist:
Erfassen eines Berührungsmusters der ringförmigen elektronischen Vorrichtung (120) mit mindestens einem ersten äußeren berührungsempfindlichen Bereich (201, 202) der Mehrzahl von äußeren berührungsempfindlichen Bereichen (201-208); und
**dadurch gekennzeichnet, dass** die ringförmige elektronische Vorrichtung (120) ferner zu Folgendem konfiguriert ist:
Aktivieren der ringförmigen elektronischen Vorrichtung (120) in Reaktion auf das erfasste Berührungsmuster zum Erfassen einer Geste mit der Mehrzahl von äußeren berührungsempfindlichen Bereichen (201-208).

15. Am Körper tragbare ringförmige elektronische Vorrichtung (120) nach Anspruch 14, konfiguriert zum Durchführen des Verfahrens nach einem der Ansprüche 3-13.

16. Am Körper tragbare ringförmige elektronische Vorrichtung (120) nach einem der Ansprüche 14-15, wobei die ringförmige elektronische Vorrichtung (120) ferner eine Aktivierungsschaltung (242) umfasst, die elektrisch mit jedem berührungsempfindlichen Bereich (201-208) verbunden und dazu konfiguriert ist, das Berührungsmuster zu erfassen und die ringförmige elektronische Vorrichtung (120) zum Erfassen der Geste zu aktivieren.

17. Am Körper tragbare ringförmige elektronische Vorrichtung (120) nach einem der Ansprüche 14-16, wobei die ringförmige elektronische Vorrichtung (120) ferner eine Berührungsschaltung (244) umfasst, die elektrisch mit jedem berührungsempfindlichen Bereich (201-208) verbunden ist, und wobei die Berührungsschaltung (244) zum Erfassen der Geste konfiguriert ist.

18. Am Körper tragbare ringförmige elektronische Vorrichtung (120) nach Anspruch 17, wobei die Aktivierungsschaltung (242) dazu konfiguriert ist, die Berührungsschaltung (244) in Reaktion auf das erfasste Berührungsmuster zum Erfassen der Geste zu aktivieren.

19. Am Körper tragbare ringförmige elektronische Vorrichtung (120) nach einem der Ansprüche 14-18, wobei die Berührungsschaltung (244) die Aktivierungsschaltung (242) umfasst.

20. Am Körper tragbare ringförmige elektronische Vorrichtung (120) nach einem der Ansprüche 14-19, ferner umfassend eine Kommunikationselektrode (224) auf der Innenfläche (220) der ringförmigen elektronischen Vorrichtung (120), wobei die Kommunikationselektrode (224) zum Kommunizieren mit einer am Körper tragbaren elektronischen Vorrichtung (110) über In-Body-Kommunikation, IBC, verwendet wird.

21. Am Körper tragbare ringförmige elektronische Vorrichtung (120) nach einem der Ansprüche 14-20, wobei die am Körper tragbare elektronische Vorrichtung (110) eines von einer Smartwatch, einem Mobiltelefon, einem Headset, einem elektronischen Kleidungsstück und einer elektronischen Brille oder eine beliebige Kombination aus der Smartwatch, dem Mobiltelefon, dem Headset, dem elektronischen Kleidungsstück und der elektronischen Brille ist.

22. Computerprogramm (503), umfassend computerlesbare Codeeinheiten, die bei Ausführung auf einer am Körper tragbaren elektronischen Vorrichtung (120) nach einem der Ansprüche 14-21 die am Körper tragbare elektronische Vorrichtung (120) zum Durchführen des Verfahrens nach einem der Ansprüche 1-9 veranlassen.

23. Datenträger (505), umfassend das Computerprogramm nach dem vorhergehenden Anspruch, wobei der Datenträger (505) eines von einem elektronischen Signal, einem optischen Signal, einem Funksignal und einem computerlesbaren Medium ist.

## Revendications

1. Procédé, réalisé par un dispositif électronique en forme d'anneau pouvant être porté (120) comprenant une pluralité de zones tactiles extérieures (201-208) agencées sur une face extérieure (210) du dispositif électronique en forme d'anneau (120), le procédé comprenant :
*la détection* (301) d'un motif de toucher du dispositif électronique en forme d'anneau (120) avec au moins une première zone tactile extérieure (201, 202) de la pluralité de zones tactiles extérieures (201-208) ; et
**caractérisé par** :
en réponse à la détection du motif de toucher, *l'activation* (302b) du dispositif électronique en forme d'anneau (120) pour détecter un geste avec une ou plusieurs de la pluralité de zones tactiles extérieures (201-208).

2. Procédé selon la revendication 1, dans lequel le dispositif électronique en forme d'anneau (120) comprend en outre un circuit d'activation (242) relié électriquement à chaque zone tactile extérieure (201-208) et dans lequel la détection du motif de toucher et l'activation du dispositif électronique en forme d'anneau (120) pour détecter le geste sont réalisées par le circuit d'activation (242).

3. Procédé selon la revendication 1 ou 2, dans lequel le dispositif électronique en forme d'anneau (120) comprend en outre un circuit de toucher (244) relié électriquement à chaque zone tactile extérieure (201-208) et configuré pour détecter le geste lorsqu'il est activé, et dans lequel l'activation du dispositif électronique en forme d'anneau (120) pour détecter le geste comprend l'activation du circuit de toucher (244) pour détecter le geste.

4. Procédé selon la revendication 3, dans lequel le circuit d'activation (242) active le circuit de toucher (244), en réponse à la détection du motif de toucher, pour détecter le geste.

5. Procédé selon l'une quelconque des revendications 1 à 4, dans lequel la détection du motif de toucher est basée sur une mesure de résistance entre deux zones tactiles extérieures (201, 202) parmi la pluralité de zones tactiles extérieures (201-208).

6. Procédé selon l'une quelconque des revendications 1 à 5, dans lequel la détection du motif de toucher comprend la détection d'une réponse asymétrique avec la pluralité de zones tactiles extérieures (201-208), dans lequel la réponse asymétrique comprend la détection d'un toucher avec deux zones tactiles extérieures (201, 202, 203) ou plus qui sont réparties de manière asymétrique sur la face extérieure (210) du dispositif électronique en forme d'anneau (110).

7. Procédé selon l'une quelconque des revendications 1 à 6, dans lequel la détection du motif de toucher comprend la détection d'un toucher à partir de deux zones tactiles extérieures (201, 202) consécutives ou plus.

8. Procédé selon l'une quelconque des revendications 1 à 7, dans lequel le motif de toucher comprend au moins deux touchers séparés simultanés.

9. Procédé selon l'une quelconque des revendications 1 à 8, dans lequel la pluralité de zones tactiles extérieures (201-208) sont des zones tactiles capacitives et la détection du geste comprend la détection d'un changement d'une mesure liée à une capacité de l'une respective des une ou plusieurs de la pluralité de zones tactiles extérieures (201-208).

10. Procédé selon l'une quelconque des revendications 1 à 9, comprenant en outre :
*la détection* (304) du geste avec une deuxième zone tactile extérieure (202) parmi la pluralité de zones tactiles extérieures (201-208), la deuxième zone tactile extérieure (204) étant agencée sur le dispositif électronique en forme d'anneau (120) à une fraction d'une circonférence du dispositif électronique en forme d'anneau (120) à partir de l'au moins une première zone tactile extérieure (201, 202).

11. Procédé selon l'une quelconque des revendications 1 à 10, comprenant en outre :
*la fourniture* (303) d'une indication d'activation du dispositif électronique en forme d'anneau (120) pour détecter le geste à un dispositif électronique pouvant être porté (110) ; et
*la fourniture* (305) d'une indication du geste au dispositif électronique pouvant être porté (110).

12. Procédé selon l'une quelconque des revendications 1 à 11, dans lequel l'activation du dispositif électronique en forme d'anneau (120) pour détecter le geste est en outre basée sur l'une quelconque parmi :
une indication d'une confirmation de l'activation reçue depuis le dispositif électronique pouvant être porté (110) ;
des données provenant d'un capteur de mouvement (114) compris dans le dispositif électronique pouvant être porté (110) ou dans le dispositif électronique en forme d'anneau (120) ;
une indication qu'un dispositif d'affichage (115) du dispositif électronique pouvant être porté (110) est actif, dans lequel l'indication est reçue depuis le dispositif électronique pouvant être portée (110) ; et
des données de toucher provenant d'une zone tactile intérieure (222) agencée sur une face intérieure (220) du dispositif électronique en forme d'anneau (120).

13. Procédé selon l'une quelconque des revendications 1 à 12, comprenant en outre :
*la désactivation* (306) du dispositif électronique en forme d'anneau (120) pour détecter le geste en réponse à la non-détection du geste au cours d'une période de temps.

14. Dispositif électronique en forme d'anneau pouvant être porté (120), dans lequel le dispositif électronique en forme d'anneau (120) comprend une pluralité de zones tactiles extérieures (201-208) agencées sur une face extérieure (210) du dispositif électronique en forme d'anneau (120), et dans lequel le dispositif électronique en forme d'anneau (120) est configuré pour :
détecter un motif de toucher du dispositif électronique en forme d'anneau (120) avec au moins une première zone tactile extérieure (201, 202) de la pluralité de zones tactiles extérieures (201-208) ; et
**caractérisé en ce que** le dispositif électronique en forme d'anneau (120) est en outre configuré pour :
en réponse au motif de toucher détecté, activer le dispositif électronique en forme d'anneau (120) pour détecter un geste avec la pluralité de zones tactiles extérieures (201-208).

15. Dispositif électronique en forme d'anneau pouvant être porté (120) selon la revendication 14, configuré pour réaliser le procédé selon l'une quelconque des revendications 3 à 13.

16. Dispositif électronique en forme d'anneau pouvant être porté (120) selon l'une quelconque des revendications 14 et 15, dans lequel le dispositif électronique en forme d'anneau (120) comprend en outre un circuit d'activation (242) relié électriquement à chaque zone tactile (201-208) et configuré pour détecter le motif de toucher et activer le dispositif électronique en forme d'anneau (120) pour détecter le geste.

17. Dispositif électronique en forme d'anneau pouvant être porté (120) selon l'une quelconque des revendications 14 à 16, dans lequel le dispositif électronique en forme d'anneau (120) comprend en outre un circuit de toucher (244) relié électriquement à chaque zone tactile (201-208) et dans lequel le circuit de toucher (242) est configuré pour détecter le geste.

18. Dispositif électronique en forme d'anneau pouvant être porté (120) selon la revendication 17, dans lequel le circuit d'activation (242) est configuré pour activer le circuit de toucher (244), en réponse au motif de toucher détecté, pour détecter le geste.

19. Dispositif électronique en forme d'anneau pouvant être porté (120) selon l'une quelconque des revendications 14 à 18, dans lequel le circuit de toucher (244) comprend le circuit d'activation (242).

20. Dispositif électronique en forme d'anneau pouvant être porté (120) selon l'une quelconque des revendications 14 à 19, comprenant en outre une électrode de communication (224) sur la face intérieure (220) du dispositif électronique en forme d'anneau (120), dans lequel l'électrode de communication (224) est utilisée pour communiquer avec un dispositif électronique pouvant être porté (110) via une communication intracorporelle, IBC.

21. Dispositif électronique en forme d'anneau pouvant être porté (120) selon l'une quelconque des revendications 14 à 20, dans lequel le dispositif électronique pouvant être porté (110) est l'un quelconque parmi une montre connectée, un téléphone mobile, un casque, un vêtement électronique et des lunettes électroniques, ou toute combinaison de la montre connectée, du téléphone mobile, du casque, du vêtement électronique et des lunettes électroniques.

22. Programme informatique (503), comprenant des unités de code lisibles par ordinateur qui, lorsqu'elles sont exécutées sur un dispositif électronique en forme d'anneau pouvant être porté (120) selon l'une quelconque des revendications 14 à 21, amènent le dispositif électronique en forme d'anneau pouvant être porté (120) à réaliser le procédé selon l'une quelconque des revendications 1 à 9.

23. Support (505) comprenant le programme informatique selon la revendication précédente, dans lequel le support (505) est l'un parmi un signal électronique, un signal optique, un signal radio et un support lisible par ordinateur.
